(19) Europäisches Patentamt
European Patent Office
Office européen des brevets

(11) **EP 4 622 305 A1**

(12) **EUROPEAN PATENT APPLICATION**
published in accordance with Art. 153(4) EPC

(43) Date of publication:
**24.09.2025 Bulletin 2025/39**

(21) Application number: 23893790.8

(22) Date of filing: **20.11.2023**

(51) International Patent Classification (IPC):
*H04W 4/02* (2018.01)  *H04W 72/04* (2023.01)

(52) Cooperative Patent Classification (CPC):
**H04W 4/02; H04W 24/08; H04W 64/00;
H04W 72/04; H04W 72/231**

(86) International application number:
**PCT/CN2023/132680**

(87) International publication number:
**WO 2024/109700 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022  CN 202211490362**

(71) Applicant: **Huawei Technologies Co., Ltd.
Shenzhen, Guangdong 518129 (CN)**

(72) Inventors:
• **YU, Yingjie
  Shenzhen, Guangdong 518129 (CN)**
• **HUANG, Su
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS, STORAGE MEDIUM AND COMPUTER PROGRAM PRODUCT**

(57)    In the field of positioning technologies, a communication method, an apparatus, a storage medium, and a computer program product are provided, and are used to configure a signal used for positioning, to improve positioning precision. In this application, a first apparatus receives first configuration information and second configuration information of a first signal, and sends the first signal based on the first configuration information and the second configuration information. The first configuration information indicates that the first signal is associated with a spatial relation of a target signal. The second configuration information indicates that the first signal is associated with a spatial relation of a path of the target signal. In this way, a beam of the first signal may face a direction of the path of the target signal. Therefore, a probability that an obstacle is encountered on a transmission path of the first signal is low, and precision of a measurement result obtained by performing measurement by the apparatus for measuring the first signal is high, so that positioning accuracy can be improved.

FIG. 5

**Description**

CROSS-REFERENCE TO RELATED APPLICATIONS

This application claims priority to Chinese Patent Application No. 202211490362.4, filed with the China National Intellectual Property Administration on November 25, 2022 and entitled "COMMUNICATION METHOD, APPARATUS, STORAGE MEDIUM, AND COMPUTER PROGRAM PRODUCT", which is incorporated herein by reference in its entirety.

TECHNICAL FIELD

This application relates to the field of positioning technologies, and in particular, to a communication method, an apparatus, a storage medium, and a computer program product.

BACKGROUND

With rapid development of communication technologies, high-precision positioning is gradually determined as an important research project in a 5th generation (5th generation mobile networks or 5th generation wireless systems, 5G) mobile communication system of the 3rd generation partnership project (3rd generation partnership project, 3GPP). Scenarios of new radio (New Radio, NR) positioning mainly include: enhanced mobile broadband (enhanced mobile broadband, eMBB) outdoor, eMBB indoor, ultra-reliable low-latency communication (ultra-reliable low latency communications, URLLC), and massive machine-type communications (massive machine type communication, mMTC)/an internet of things (internet of things, IoT). NR positioning also requires characteristics such as high security, scalability, high availability, and precision assurance in high-speed applications.

In a 3GPP standard, a plurality of positioning technologies such as a downlink time difference of arrival (down link-time of arrival, DL-TDOA), a downlink angle of departure (downlink-angle of departure, DL-AOD), an uplink time difference of arrival (up link-time of arrival, UL-TDOA), an uplink angle of arrival (uplink-angle of arrival, UL-AOA), and a round trip time (round trip time, RTT) are supported. Positioning technologies may be mainly classified into an uplink positioning technology, a downlink positioning technology, and an uplink/downlink positioning technology. The uplink positioning technology includes, for example, an UL-AOA. In this technology, a base station may measure a signal sent by a terminal device, to obtain an angle of arrival (angle of arrival, AOA). The angle of arrival may be used to estimate a location of the terminal device. The uplink/downlink positioning technology includes, for example, an RTT. In the positioning technology, both a terminal device and a base station need to measure a time of arrival of a received signal to obtain an RTT through solving.

It can be learned that, in the positioning technologies, apparatuses participating in positioning need to send signals, and measurement results of the signals may be used to position apparatuses that need to be positioned. How to configure the signals becomes a problem that needs to be urgently resolved currently.

SUMMARY

Embodiments of this application provide a communication method, an apparatus, a storage medium, and a computer program product, to configure a signal. For example, a spatial relation of the signal is configured to be associated with a spatial relation of a path of a target signal, in other words, the spatial relation of the signal is configured as a level of a path, to improve positioning precision.

**According to a first aspect,** an embodiment of this application provides a communication method. The method may be applied to a first apparatus. The first apparatus may be, for example, a terminal device; or a unit, a module, or a chip (system) in the terminal device. The first apparatus may alternatively be a network device or a chip (system) in a network.

In the method, the first apparatus receives first configuration information of a first signal, where the first configuration information indicates that the first signal is associated with a spatial relation of a target signal. The first apparatus receives second configuration information of the first signal, where the second configuration information indicates that the first signal is associated with a spatial relation of a path of the target signal. The first apparatus sends the first signal based on the first configuration information and the second configuration information.

The first signal may be used to determine location information of the first apparatus. Because that the first signal is associated with the spatial relation of the path of the target signal is configured by using the second configuration information, in other words, a spatial relation of the signal is configured as a level of the path, so that a finer-grained configuration of the spatial relation of the signal can be implemented. Then, that the spatial relation of the first signal sent by the first apparatus may be associated with the path of the target signal may also be understood as that a direction of a beam of the first signal sent by the first apparatus may be a direction of the path. In addition, the direction of the beam of the first signal is the direction of the path. Therefore, a probability that an obstacle is encountered on a transmission path of the first signal is low, and precision of a measurement result obtained by performing measurement by the apparatus for measuring the first signal is high, so that positioning accuracy can be improved.

In a possible implementation, the first apparatus receives third configuration information of a second signal, where the third configuration information indicates that the second signal is associated with the spatial relation of the target signal. The first apparatus receives fourth configuration information of the second signal, where the fourth configuration information indicates that the second signal is associated with a spatial relation of a path of the target signal. The first apparatus sends the second signal based on the third configuration information and the fourth configuration information.

Because a transmission delay exists in a process of obtaining a round-trip time of signal transmission between the first apparatus and the third apparatus, the transmission delay causes a positioning deviation. The second apparatus configures, for the first apparatus, signals associated with spatial relations of two paths of the target signal, so that the first apparatus is positioned based on the two signals. This can reduce impact of the transmission delay of the RTT on positioning precision, and improve positioning precision.

When the second apparatus determines that a spatial relation of one signal needs to be associated with a path, the second apparatus may indicate information about the path associated with the spatial relation of the signal. For example, the second configuration information indicates that the first signal is associated with a spatial relation of a first path of the target signal. For example, the second configuration information includes information about the first path. The first path is a $1^{st}$ path, or the first path is another path. When the second apparatus determines that a spatial relation of one signal does not need to be associated with a path, the second apparatus may not indicate information about the path associated with the spatial relation of the signal. In this way, when determining that the second apparatus does not indicate the information about the path associated with the spatial relation of the signal, the first apparatus determines that the spatial relation of the signal does not need to be associated with the path.

In another possible implementation, the second apparatus may set path switch information, and the path switch information may indicate whether a spatial relation of a signal needs to be associated with a path. For example, the second configuration information includes one or more of first preset information in a message carrying the first configuration information, a first preset bit value carried on a first preset bit, or second preset information on a second preset bit. In this way, when determining, based on the path switch information, that a spatial relation of a signal needs to be associated with a path, the first apparatus may determine the path that needs to be associated with the spatial relation of the signal. For example, the first apparatus selects the first path as the path associated with the spatial relation of the first signal. In this manner, the second apparatus may not indicate information about the path associated with the spatial relation of the signal.

In this embodiment of this application, the first path satisfies one or more of the following content: The first path is a direct path of the target signal; the first path is a reflection path of the target signal; the first path is a path whose receiving time ranks $N_1^{th}$ in paths corresponding to the target signal, where $N_1$ is a positive integer; or the first path is a path whose energy ranks $M_1^{th}$ in paths corresponding to the target signal, where $M_1$ is a positive integer. In other words, a plurality of paths of the target signal may be distinguished according to a specific rule. For example, the plurality of paths may be classified based on a path type (for example, whether the path is a reflection path or a direct path), may be sorted based on receiving times of the paths, or may be sorted based on energy of the paths. The first path may be a path determined according to these rules. For example, the second apparatus may configure, for the first apparatus, a path associated with the spatial relation of the first signal as a $1^{st}$ path of the target signal, where the $1^{st}$ path may be considered as a path whose receiving time is earliest. In this case, the first apparatus may associate the spatial relation of the first signal with the $1^{st}$ path of the target signal. For another example, the second apparatus may indicate to the first apparatus that the spatial relation of the first signal is associated with the path of the target signal. In this case, the first apparatus may select a path from the paths of the target signal (for example, select a $1^{st}$ path, select a path whose energy ranks first, or select a path whose energy ranks second), and associate a spatial relation of the path with the first signal. In this way, solution flexibility can be improved.

In a possible implementation, the second configuration information is carried in one or more of the following content: information used to configure the spatial relation of the first signal, information used to configure a resource of the first signal, or information used to configure a resource set of the first signal. In this way, a location of the second configuration information may be flexibly set based on an actual requirement. In addition, this can be more compatible with the conventional technology.

In a possible implementation, the first apparatus receives the target signal. The first apparatus determines the first path of the target signal. The first apparatus sends the first signal based on the first path, where the first signal is associated with the spatial relation of the first path. The first apparatus may receive the target signal from the third apparatus, and then send the first signal to the third apparatus based on the first path of the target signal. The first path of the target signal may be determined by the first apparatus based on the second configuration information, or may be determined by the first apparatus. The first apparatus and the second apparatus may determine, through transmission of the target signal and the first signal, a parameter used for positioning the first apparatus, for example, a round-trip time, so that the first apparatus can be positioned based on the parameter.

In a possible implementation, the first apparatus sends information indicating that the first signal is associated with the spatial relation of the first path. For example, the information indicating that the first signal is associated with the spatial relation of the first path includes identification information of the first signal and the information about the first path.

In a possible implementation, the first apparatus may send, to the third apparatus, the information indicating that the first signal is associated with the spatial relation of the first path, so that the third apparatus knows a specific path that is of the target signal and that is associated with the spatial relation of the first signal, and then may establish an association relation between the measurement result of the first signal and the path based on the information. In this way, the apparatus for positioning the first apparatus can perform positioning based on more information, so that positioning precision can be improved.

In another possible implementation, the first apparatus may send, to a location management apparatus, the information indicating that the first signal is associated with the spatial relation of the first path, so that the location management apparatus knows a specific path that is of the target signal and that is associated with the spatial relation of the first signal, and then may establish an association relation between the measurement result of the first signal and the path based on the information. In this way, the apparatus for positioning the first apparatus can perform positioning based on more information, so that positioning precision can be improved.

In a possible implementation, the first apparatus obtains a first measurement result based on a measurement result of the target signal, where the first measurement result includes a measurement result of the first path of the target signal. The first apparatus sends the first measurement result. The first apparatus may send the first measurement result to the third apparatus or the location management apparatus, and the first measurement result may be used to determine the location information of the first apparatus. For example, the first measurement result includes a time of arrival of the target signal, and the first measurement result is used to determine a first RTT. For example, the first RTT is determined based on the target signal and the first signal, and the first RTT is used to determine the location information of the first apparatus. More signal measurement results are used to position the first apparatus. This can further improve positioning precision.

In a possible implementation, the first measurement result further includes the information about the first path. In this way, the first apparatus may notify the third apparatus or the location management apparatus of the association relation between the first measurement result and the first path, so that the apparatus for positioning the first apparatus can perform positioning based on more information, to improve positioning precision.

**According to a second aspect,** an embodiment of this application provides a communication method. The method may be applied to a second apparatus. The second apparatus may be a network device; or a unit, a module, or a chip (system) in the network device. Alternatively, the second apparatus may be a terminal device; or a unit, a module, or a chip (system) in the terminal device.

The second apparatus sends first configuration information of a first signal, where the first configuration information indicates that the first signal is associated with a spatial relation of a target signal. The second apparatus sends second configuration information of the first signal, where the second configuration information indicates that the first signal is associated with a spatial relation of a path of the target signal.

The first signal may be used to determine location information of a first apparatus. Because that the first signal is associated with the spatial relation of the path of the target signal is configured by using the second configuration information, in other words, a spatial relation of the signal is configured as a level of the path, so that a finer-grained configuration of the spatial relation of the signal can be implemented. Then, that the spatial relation of the first signal sent by the first apparatus may be associated with the path of the target signal may also be understood as that a direction of a beam of the first signal sent by the first apparatus may be a direction of the path. In addition, the direction of the beam of the first signal is the direction of the path. Therefore, a probability that an obstacle is encountered on a transmission path of the first signal is low, and precision of a measurement result obtained by performing measurement by the apparatus for measuring the first signal is high, so that positioning accuracy can be improved.

In a possible implementation, the second apparatus sends third configuration information of the second signal, where the third configuration information indicates that the second signal is associated with the spatial relation of the target signal. The second apparatus sends fourth configuration information of the second signal, where the fourth configuration information indicates that the second signal is associated with a spatial relation of a path of the target signal.

Because a transmission delay exists in a process of obtaining a round-trip time of signal transmission between the first apparatus and the third apparatus, the transmission delay causes a positioning deviation. The second apparatus configures, for the first apparatus, signals associated with spatial relations of two paths of the target signal, so that the first apparatus is positioned based on the two signals. This can reduce impact of the transmission delay of the RTT on positioning precision, and improve positioning precision.

In a possible implementation, the second configuration information indicates that the first signal is associated with a spatial relation of a first path of the target signal.

For related descriptions and beneficial effects, refer to related descriptions of the first aspect. Details are not described again.

In a possible implementation, the first path is a 1st path, or the first path is another path.

For related descriptions and beneficial effects, refer to related descriptions of the first aspect. Details are not described again.

In a possible implementation, the second configuration information includes information about the first path.

For related descriptions and beneficial effects, refer to related descriptions of the first aspect. Details are not described again.

In a possible implementation, the second configuration information includes one or more of first preset information in a message carrying the first configuration information, a first preset bit value carried on a first preset bit, or second preset information on a second preset bit.

For related descriptions and beneficial effects, refer to related descriptions of the first aspect. Details are not described again.

In a possible implementation, the second configuration information is carried in one or more of the following content: information used to configure the spatial relation of the first signal, information used to configure a resource of the first signal, or information used to configure a resource set of the first signal.

For related descriptions and beneficial effects, refer to related descriptions of the first aspect. Details are not described again.

In a possible implementation, the first path satisfies one or more of the following content: The first path is a direct path of the target signal; the first path is a reflection path of the target signal; the first path is a path whose receiving time ranks $N_1^{th}$ in paths corresponding to the target signal, where $N_1$ is a positive integer; or the first path is a path whose energy ranks $M_1^{th}$ in paths corresponding to the target signal, where $M_1$ is a positive integer.

For related descriptions and beneficial effects, refer to related descriptions of the first aspect. Details are not described again.

**According to a third aspect,** an embodiment of this application provides a communication method. The method may be applied to a third apparatus. The third apparatus may be, for example, a terminal device; or a unit, a module, or a chip (system) in the terminal device. Alternatively, the third apparatus may be a network device; or a unit, a module, or a chip (system) in the network device. In this application, the third apparatus and the second apparatus may be same apparatuses, or the third apparatus and the second apparatus may be two different apparatuses.

The third apparatus sends a target signal to a first apparatus. The third apparatus receives a first signal from the first apparatus. The third apparatus determines a second measurement result based on a measurement result of the first signal. The first signal is associated with a spatial relation of a first path of the target signal, and the second measurement result is used to determine a location of the first apparatus.

That a spatial relation of the first signal sent by the first apparatus may be associated with a path of the target signal may also be understood as that a direction of a beam of the first signal sent by the first apparatus may be a direction of the path. In addition, the direction of the beam of the first signal is the direction of the path. Therefore, a probability that an obstacle is encountered on a transmission path of the first signal is low, and precision of the measurement result obtained by performing measurement by the third apparatus is high, so that positioning accuracy can be improved.

In a possible implementation, the third apparatus receives information indicating that the first signal is associated with the spatial relation of the first path. For example, the information indicating that the first signal is associated with the spatial relation of the first path includes identification information of the first signal and information about the first path. In this way, the third apparatus may know a specific path that is of the target signal and that is associated with the spatial relation of the first signal, and then may establish an association relation between the measurement result of the first signal and the path based on the information. In this way, the apparatus for positioning the first apparatus may perform positioning based on more information, so that positioning precision can be improved.

In a possible implementation, the third apparatus receives a first measurement result, where the first measurement result includes a measurement result of the first path of the target signal. The first measurement result may be used to determine location information of the first apparatus. For example, the first measurement result includes a time of arrival of the target signal, and the first measurement result is used to determine a first RTT. For example, the first RTT is determined based on the target signal and the first signal, and the first RTT is used to determine the location information of the first apparatus. More signal measurement results are used to position the first apparatus. This can further improve positioning precision.

In a possible implementation, the first measurement result further includes the information about the first path. In this way, the first apparatus may notify the third apparatus of the association relation between the first measurement result and the first path, so that the apparatus for positioning the first apparatus can perform positioning based on more information, to improve positioning precision.

In this embodiment of this application, the third apparatus may position the first apparatus based on the second measurement result, or may send the second measurement result to another apparatus. For example, the third apparatus sends the second measurement result to a location management apparatus, so that the location management apparatus positions the first apparatus based on the second measurement result. Therefore, flexibility of the solution can be improved, and a positioning operation is performed by the location management apparatus, so that workload of the third apparatus can be reduced.

In a possible implementation, the second measurement result includes the information about the first path. In this way, the third apparatus may notify the location management apparatus of the association relation between the second measurement result and the first path, so that the apparatus for positioning the first apparatus can perform positioning based on more information, to improve positioning precision.

In a possible implementation, the second measurement result includes one or more of an angle of arrival in a horizontal direction of the first signal, an angle of arrival in a vertical direction of the first signal, or the first RTT, where the first RTT is an RTT corresponding to the target signal and the first signal. When the second measurement result includes information about the angle of arrival and the first RTT, the first apparatus may be positioned by using one third apparatus. In this way, single-site positioning can be implemented, and precision of the single-site positioning can be improved.

In a possible implementation, the third apparatus receives a second signal from the first apparatus, and the third apparatus determines a third measurement result based on a measurement result of the second signal, where the second signal is associated with a spatial relation of a second path of the target signal, and the third measurement result is used to determine the location of the first apparatus. Because a transmission delay exists in a process of obtaining a round-trip time of signal transmission between the first apparatus and the third apparatus, the transmission delay causes a positioning deviation. The first apparatus sends, to the third apparatus, signals associated with spatial relations of two paths of the target signal, so that the apparatus for positioning the first apparatus positions the first apparatus based on the two signals. This can reduce impact of the transmission delay of the RTT on positioning precision, and improve positioning precision.

In this embodiment of this application, the third apparatus may position the first apparatus based on the second measurement result and the third measurement result, or may send the second measurement result and the third measurement result to another apparatus. For example, the third apparatus sends the second measurement result and the third measurement result to the location management apparatus, so that the location management apparatus positions the first apparatus based on the second measurement result and the third measurement result. Therefore, flexibility of the solution can be improved, and a positioning operation is performed by the location management apparatus, so that workload of the third apparatus can be reduced.

In a possible implementation, the third measurement result includes information about the second path. In this way, the third apparatus may notify the location management apparatus of the association relation between the third measurement result and the second path, so that the apparatus for positioning the first apparatus can perform positioning based on more information, to improve positioning precision.

**According to a fourth aspect,** an embodiment of this application provides a communication method. The method may be applied to a location management apparatus. Alternatively, the location management apparatus may be a network device; or a unit, a module, or a chip (system) in the network device.

The location management apparatus receives a second measurement result, where the second measurement result is determined based on a measurement result of a first signal, and the first signal is associated with a spatial relation of a first path of a target signal. The location management apparatus determines a location of a first apparatus based on the second measurement result.

That a spatial relation of the first signal may be associated with a path of the target signal may be understood as that a direction of a beam of the first signal may be a direction of the path. Therefore, a probability that an obstacle is encountered on a transmission path of the first signal is low, and precision of a measurement result obtained by performing measurement by a third apparatus is high, so that positioning accuracy can be improved.

In a possible implementation, the second measurement result includes information about the first path. In this way, the third apparatus may notify the location management apparatus of the association relation between the second measurement result and the first path, so that the location management apparatus can perform positioning based on more information, to improve positioning precision.

In a possible implementation, the second measurement result includes one or more of an angle of arrival in a horizontal direction of the first signal, an angle of arrival in a vertical direction of the first signal, or a first RTT, where the first RTT is an RTT corresponding to the target signal and the first signal. When the second measurement result includes information about the angle of arrival and the first RTT, the first apparatus may be positioned by using one third apparatus. In this way, single-site positioning can be implemented, and precision of the single-site positioning can be improved.

In a possible implementation, the location management apparatus receives a third measurement result, where the third measurement result is determined based on a second signal, and the second signal is associated with a spatial relation of a second path of the target signal. The determining a location of a first apparatus based on the second measurement result includes: The location management apparatus determines the location of the first apparatus based on the second measurement result and the third measurement result.

Because a transmission delay exists in a process of obtaining a round-trip time of signal transmission between the first apparatus and the third apparatus, the transmission delay causes a positioning deviation. The first apparatus sends, to the third apparatus, signals associated with spatial relations of two paths of the target signal, so that the location management apparatus positions the first apparatus based on the two signals. This can reduce impact of the transmission delay of the RTT on positioning precision, and improve positioning precision.

In a possible implementation, the third measurement result includes information about the second path. In this way, the third apparatus may notify the location management apparatus of the association relation between the third measurement result and the second path, so that the apparatus for positioning the first apparatus can perform positioning based on more information, to improve positioning precision.

**According to a fifth aspect,** a communication apparatus is provided. The communication apparatus may be the foregoing first apparatus, second apparatus, third apparatus, or location management apparatus. The communication apparatus may include a communication unit and a processing unit, to perform any one of the first aspect to the fourth aspect, or perform any one of the possible implementations of the first aspect to the fourth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit is a transmitter machine and a receiver machine.

Optionally, the communication apparatus further includes modules that may be configured to perform any one of the first aspect to the fourth aspect, or perform any one of the possible implementations of the first aspect to the fourth aspect.

**According to a sixth aspect,** a communication apparatus is provided. The communication apparatus may be the foregoing first apparatus, second apparatus, third apparatus, or location management apparatus. The communication apparatus may include a processor and a memory, to perform any one of the first aspect to the fourth aspect, or perform any one of the possible implementations of the first aspect to the fourth aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the fourth aspect, or perform any one of the possible implementations of the first aspect to the fourth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

**According to a seventh aspect,** a communication apparatus is provided. The communication apparatus may be the foregoing first apparatus, second apparatus, third apparatus, or location management apparatus. The communication apparatus may include a processor, to perform any one of the first aspect to the fourth aspect, or perform any one of the possible implementations of the first aspect to the fourth aspect. The processor is coupled to a memory. Optionally, the communication apparatus further includes the memory. Optionally, the communication apparatus further includes a communication interface, and the processor is coupled to the communication interface.

In an implementation, when the communication apparatus is the first apparatus, second apparatus, third apparatus, or location management apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to an eighth aspect,** a system is provided. The system includes the foregoing second apparatus.

In a possible implementation, the system may further include one or more first apparatuses. In another possible implementation, the system may further include one or more third apparatuses. In still another possible implementation, the system may further include a location management apparatus.

**According to a ninth aspect,** a computer program product is provided. The computer program product includes a computer program (which may also be referred to as code or instructions). When the computer program runs, a computer is enabled to perform any one of the first aspect to the fourth aspect, or perform any one of the possible implementations of the first aspect to the fourth aspect.

**According to a tenth aspect,** a computer-readable storage medium is provided. The computer-readable storage medium stores a computer program (which may also be referred to as code or instructions). When the computer program runs on a computer, the computer is enabled to perform any one of the first aspect to the fourth aspect, or perform any one of the possible implementations of the first aspect to the fourth aspect.

**According to an eleventh aspect,** a chip system is provided. The chip system may include a processor. The processor is coupled to a memory, and may be configured to perform any one of the first aspect to the fourth aspect, or perform any one of the possible implementations of the first aspect to the fourth aspect. Optionally, the chip system further includes the memory. The memory is configured to store a computer program (which may also be referred to as code or instructions). The processor is configured to: invoke the computer program from the memory, and run the computer program, so that a device on which the chip system is installed performs any one of the first aspect to the fourth aspect, or performs any one of the possible implementations of the first aspect to the fourth aspect.

**According to a twelfth aspect,** a processing apparatus is provided. The apparatus includes an interface circuit and a processing circuit. The interface circuit may include an input circuit and an output circuit. The processing circuit is configured to: receive a signal through the input circuit, and transmit a signal through the output circuit, so that any one of the first aspect to the fourth aspect or any one of the possible implementations of the first aspect to the fourth aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a first apparatus, a second apparatus, a third apparatus, or a location management apparatus, the interface circuit may be a radio frequency processing chip in the first apparatus, second apparatus, third apparatus, or location management apparatus, and the processing circuit may be a baseband processing chip in the first apparatus, second apparatus, third apparatus, or location management apparatus.

In another implementation, the communication apparatus may be some components in the first apparatus, second apparatus, third apparatus, or location management apparatus, for example, an integrated circuit product such as a system chip or a communication chip. The interface circuit may be an input/output interface, an interface circuit, an output circuit, an input circuit, a pin, a related circuit, or the like on the chip or a chip system. The processing circuit may be a logic circuit on the chip.

BRIEF DESCRIPTION OF DRAWINGS

FIG. 1 is a diagram of an architecture of a communication system according to an embodiment of this application;
FIG. 2A is a diagram of an architecture of another communication system according to an embodiment of this application;
FIG. 2B is a diagram of an architecture of another communication system to which an embodiment of this application is applicable;
FIG. 2C is a diagram of an architecture of another communication system to which an embodiment of this application is applicable;
FIG. 2D is a diagram of an architecture of another communication system to which an embodiment of this application is applicable;
FIG. 2E is a diagram of an architecture of another communication system to which an embodiment of this application is applicable;
FIG. 3 is a diagram of a principle of determining information about an angle of arrival according to an embodiment of this application;
FIG. 4 is a diagram of a principle of performing positioning by using an RTT positioning technology and an angle of arrival positioning technology according to an embodiment of this application;
FIG. 5 is a schematic flowchart of a communication method according to an embodiment of this application;
FIG. 6 is a possible diagram of configuration information of signals configured by a second apparatus for a first apparatus according to an embodiment of this application;
FIG. 7 is another possible diagram of configuration information of signals configured by a second apparatus for a first apparatus according to an embodiment of this application;
FIG. 8 is a schematic flowchart of a communication method according to an embodiment of this application;
FIG. 9 is a diagram of a principle of determining location information of a first apparatus based on a first signal and a second signal according to an embodiment of this application;
FIG. 10 is a schematic flowchart of a communication method according to an embodiment of this application;
FIG. 11 is a diagram of a structure of a communication apparatus according to an embodiment of this application;
FIG. 12 is a diagram of a structure of a communication apparatus according to an embodiment of this application; and
FIG. 13 is a diagram of a structure of a communication apparatus according to an embodiment of this application.

DESCRIPTION OF EMBODIMENTS

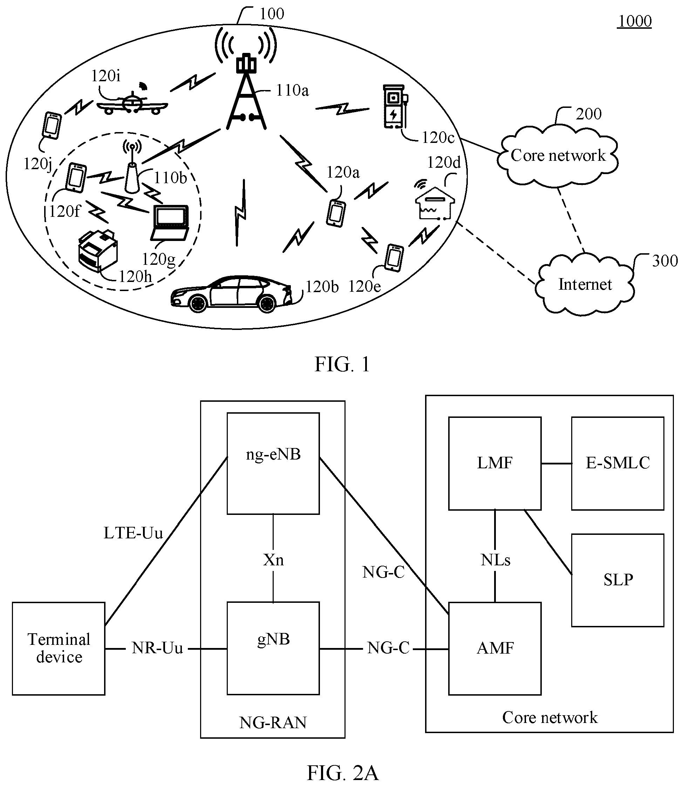

**FIG. 1** is an example of a diagram of an architecture of a communication system 1000 to which an embodiment of this application is applicable. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely a diagram. The communication system may further include another network device, for example, may further include a wireless relay device and a wireless backhaul device, which are not shown in FIG. 1.

A network device in embodiments of this application includes, for example, a radio access network (radio access network, RAN) device. The radio access network device may be a base station (base station), an evolved NodeB (evolved NodeB, eNodeB), a transmission reception point (transmission reception point, TRP), a transmission point (transmission point, TP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to technical specifications related to the 3rd generation partnership project (3rd generation partnership project, 3GPP).

The radio access network device may be a macro base station (for example, 110a in FIG. 1), may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which a base station is used as a radio access network device.

A terminal device may also be referred to as a terminal device, a user equipment (user equipment, UE), a mobile station, a mobile terminal device, or the like. The terminal device may be widely used in various scenarios, for example, device-to-device (device-to-device, D2D) communication, vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, a sensor, or the like. A specific technology and a specific device form that are used by the terminal device are not limited in embodiments of this application.

The terminal device may establish a connection to a carrier network through an interface (for example, N1) provided by the carrier network, and use services such as data and/or voice provided by the carrier network. The terminal device may further access a domain name system (domain name system, DNS) by using a carrier network, and use a carrier service deployed on the DNS and/or a service provided by a third party. The third party may be a service party other than the carrier network and the terminal device, and may provide a service such as data and/or voice for the terminal device. A specific representation form of the third party may be specifically determined based on an actual application scenario. This is not limited herein.

The terminal device may also be referred to as a terminal device, a user equipment (user equipment, UE), a mobile station, a mobile terminal device, or the like. The terminal device may be widely used in various scenarios, for example, device-to-device (device-to-device, D2D) communication, vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, a road side unit (road side unit, RSU), or the like. A specific technology and a specific device form that are used by the terminal device are not limited in embodiments of this application.

The base station and the terminal device may be at fixed locations or movable. The base station and the terminal device may be deployed on land, where the deployment includes indoor or outdoor, or handheld or vehicle-mounted deployment; may be deployed on water; or may be deployed on an aerocraft, a balloon, and a satellite in air. Application scenarios of the base station and the terminal device are not limited in embodiments of this application.

Roles of the base station and the terminal device may be relative. For example, the helicopter or uncrewed aerial vehicle 120i in FIG. 1 may be configured as a mobile base station. For those terminal devices 120j accessing the radio access network 100 through 120i, the terminal device 120i is a base station. However, for the base station 110a, 120i is a terminal device. In other words, communication between 110a and 120i is performed according to a wireless air interface protocol. Certainly, communication between 110a and 120i may alternatively be performed based on an interface protocol between base stations. In this case, for 110a, 120i is also a base station. Therefore, both the base station and the terminal device may be collectively referred to as a communication apparatus. 110a and 110b in FIG. 1 each may be referred to as a communication apparatus having a base station function, and 120a to 120j in FIG. 1 each may be referred to as a communication apparatus having a terminal device function.

Communication between a base station and a terminal device, between base stations, or between terminal devices may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, for example, a smart grid, industrial control, smart transportation, and a smart city. A function of the terminal device may alternatively be performed by a module (for example, a chip or a modem) in the terminal device, or may be performed by an apparatus including the function of the terminal device.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell that establishes the wireless connection to the terminal device is referred to as a serving cell of the terminal device. When communicating with the serving cell, the terminal device is further interfered with a signal from a neighboring cell.

A core network in embodiments of this application may include a network device that processes and forwards signaling and data of a user, for example, include a core network device such as an access and mobility management function (access and mobility management function, AMF), a session management function (session management function, SMF), a user plane gateway, and a location management device. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane network element functional entity (user plane function, UPF), is generally located on a network side. The AMF and the SMF are equivalent to a mobility management entity (mobility management entity, MME) in a long term evolution (long term evolution, LTE) system. The AMF is mainly responsible for admission, and the SMF is mainly responsible for session management. Certainly, the core network may further include other network elements, which are not listed one by one herein.

The location management device has a positioning function. The location management device in embodiments of this application may include a location management function (location management function, LMF) or a location management component (location management component, LMC), may be a local location management function (local location management function, LLMF) located in a network device, or may be a positioning server. This is not limited in embodiments of this application. For ease of description, the following embodiments are described by using an example in which the location management device is an LMF.

Based on the content shown in FIG. 1, **FIG. 2A** is an example of a diagram of an architecture of a communication system to which an embodiment of this application is applicable. The communication system is shown by using positioning architectures in LTE and NR Rel-16 as an example. As shown in FIG. 2A, involved network elements/modules mainly include three parts: a next generation radio access network (next generation radio access network, NG RAN), a terminal device, and a core network.

The core network includes a location management function (location management function, LMF), an access and mobility management function (access and mobility management function, AMF), a service location protocol (service location protocol, SLP), an evolved serving mobile location center (evolved serving mobile location center, E-SMLC), and the like. A positioning server, namely, the location management function (location management function, LMF), is connected to the AMF, and the LMF and the AMF are connected through an NLs interface. A UE communicates with a serving base station through a Uu link. An ng-eNB is an LTE base station, and a gNB is an NR base station. The base stations communicate with each other through an Xn interface. The base station communicates with the AMF through an NG-C interface. The AMF (Access and Mobility Management Function, access and mobility management unit) is equivalent to a router for communication between the gNB and the LMF. The LMF estimate a location of the UE, and the AMF communicates with the LMF through an NLs interface. The LMF is responsible for supporting different types of location services related to the terminal device, including positioning the terminal device and transferring assistance data to the terminal device. The LMF may perform positioning calculation on the terminal device based on a measurement result of another network element. The AMF may receive a terminal device-related location service request from a 5th generation core network location service (5th generation core network location service, 5GC LCS) entity, or the AMF may start some location services on behalf of a specific terminal device, and forward the location service request to the LMF. After obtaining location information returned by the terminal device, the AMF returns the related location information to the 5GC LCS entity.

The NG RAN may include a next generation NodeB (next generation NodeB, gNB), a next generation evolved NodeB (next generation evolved NodeB, ng-eNB), and the like. The gNB and the ng-eNB are connected through an Xn interface, and the LMF and the ng-eNB/gNB are connected through an NG-C interface.

One or more network devices on an NG RAN side configure a resource used to send a reference signal, and send the reference signal to the terminal device. The terminal device measures a downlink signal such as the reference signal, and feeds back a measurement result to the LMF, to support positioning. It should be understood that the reference signal is used for positioning, and may also be referred to as a positioning reference signal. This specification is mainly for downlink positioning. Therefore, the positioning reference signal may be a PRS, a cellcommon reference signal (common reference signal, CRS), a channel state information (channel state information, CSI)-RS, or the like. In this specification, an example in which the positioning reference signal is a PRS is used for description. For a manner of another reference signal, refer to the example. Details are not described herein again. In a possible implementation, the PRS resource may be configured based on a cell level, in other words, a PRS resource is configured for each cell. After the terminal device re-establishes a radio resource control (radio resource control, RRC) connection to a target cell, a base station of the target cell may configure a PRS resource for the target cell, and the terminal device obtains the PRS resource configured for the target cell, to receive and measure a PRS on the PRS resource.

A communication method provided in embodiments of this application may be applied to various communication systems, for example, an LTE system, a 5th generation (5th generation, 5G) system such as NR, and a next generation communication system such as a 6G system. Certainly, the technical solutions in embodiments of this application may also be applied to another communication system, provided that the communication system has a positioning requirement for a terminal device. In addition, the communication system is further applicable to a futureoriented communication technology. The systems described in embodiments of this application are intended to describe the technical solutions in embodiments of this application more clearly, and constitute no limitation on the technical solutions provided in embodiments of this application. A person of ordinary skill in the art may learn that, with evolution of a network architecture, the technical solutions provided in embodiments of this application are also applicable to a similar technical problem.

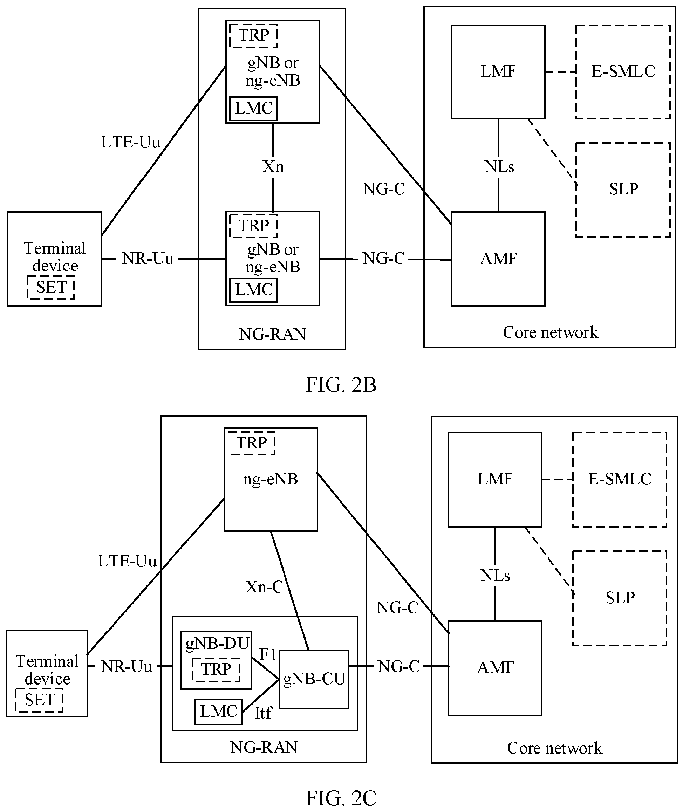

**FIG. 2B** shows a network architecture of another communication system to which an embodiment of this application is applicable. The communication system includes a core network, an NG-RAN, and a terminal device. The core network includes network elements/modules such as an LMF, an AMF, a secure user plane location (secure user plane location, SUPL) location platform (SUPL location platform, SLP), and an enhanced serving mobile location center (enhanced serving mobile location center, E-SMLC). The NG RAN includes network elements/modules such as a gNB and an ng-eNB. For specific functions of the network elements/modules such as the LMF, the AMF, the SLP, the E-SMLC, the gNB, and the ng-eNB and connection relations between the network elements/modules, refer to descriptions of a related part in FIG. 2A above. Details are not described herein again.

A difference from FIG. 2A lies in that, in the network architecture shown in FIG. 2B, an LMC is added to the NG-RAN, and a specific deployment manner of the LMC is being disposed inside a base station, for example, disposed in the gNB or the ng-ENB. In this network architecture, the LMC serves as an internal function of the base station. Therefore, no new interface needs to be introduced. The LMC may undertake some functions of the LMF. In this architecture, the gNB may not report a measurement result of a signal used for positioning to the LMF in the core network, to reduce signaling overheads and reduce a positioning delay.

**FIG. 2C** shows a network architecture of still another communication system to which an embodiment of this application is applicable. As shown in FIG. 2C, the communication system also includes a core network, an NG-RAN, and a terminal device. A difference from FIG. 2B lies in that, an LMC in the network architecture shown in FIG. 2C serves as an independent logical node in the NG-RAN, and is connected to a base station through a new interface. For example, in FIG. 2C, the LMC is connected to a gNB-CU through an interface Itf.

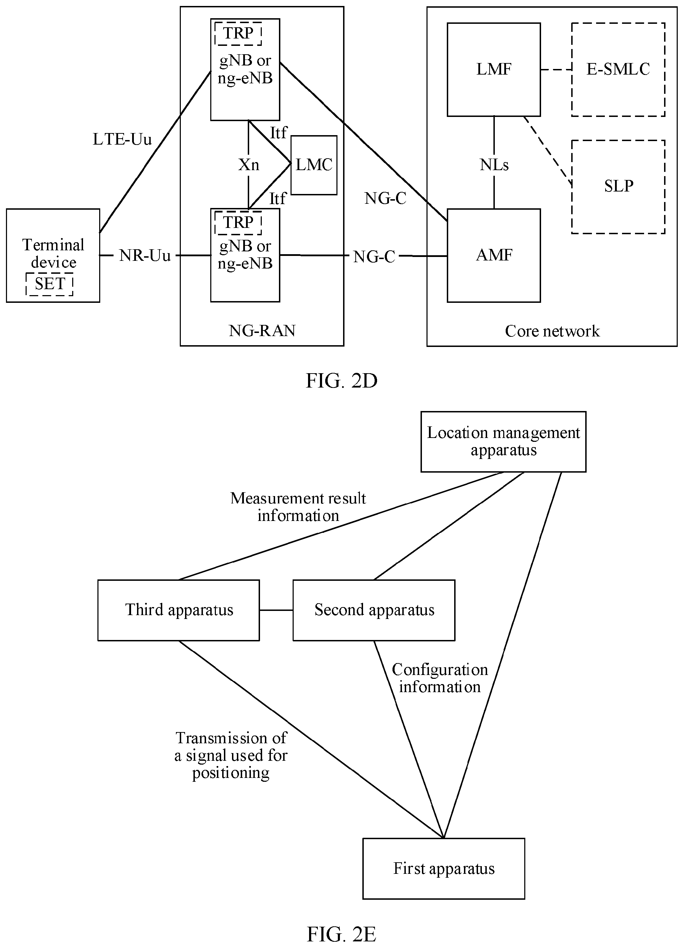

**FIG. 2D** shows a network architecture of still another communication system to which an embodiment of this application is applicable. As shown in FIG. 2D, the communication system also includes a core network, an NG-RAN, and a terminal device. An LMC serves as an independent logical node in the NG-RAN. A difference from FIG. 2C lies in that, the LMC may be connected to a plurality of base stations through new interfaces in FIG. 2D. In FIG. 2D, an example in which the LMC is connected to two base stations is used. In a specific implementation, the LMC may alternatively be connected to more base stations.

It should be understood that FIG. 2A, FIG. 2B, FIG. 2C, and FIG. 2D are examples for describing the communication systems to which embodiments of this application are applicable, and do not specifically limit types, quantities, connection manners, and the like of network elements included in the communication systems to which this application is applicable. In addition, the network element/module shown by a dashed line in FIG. 2A, FIG. 2B, FIG. 2C, and FIG. 2D is not mandatory, and is optional. For example, the E-SMLC or the SLP is not mandatory. Alternatively, the network element/module shown by a dashed line is in another existence form. For example, the gNB or the ng-eNB is also referred to as a transmission reception point (transmission reception point, TRP) in some embodiments, and the terminal device is referred to as an SUPL enabled terminal (SUPL enabled terminal, SET) in some embodiments, where SUPL is short for secure user plane location (secure user plane location, SUPL).

**FIG. 2E** is an example of a diagram of a network architecture of still another communication system according to an embodiment of this application. As shown in FIG. 2E, the communication system includes a first apparatus, a second apparatus, and a third apparatus. Optionally, the communication system may further include a location management apparatus. In this embodiment of this application, the second apparatus may configure information for the first apparatus. For example, the second apparatus may configure, for the first apparatus, configuration information of a signal used for positioning. The signal used for positioning may be transmitted between the first apparatus and the third apparatus. The third apparatus may determine a location of the first apparatus based on a measurement result; or the third apparatus may report a measurement result to the location management apparatus. In this embodiment of this application, information may also be transmitted between the first apparatus and the location management apparatus. For example, the first apparatus may also transmit the measurement result to the location management apparatus. The second apparatus and the third apparatus may be same apparatuses, or may be two different apparatuses.

The first apparatus and/or the third apparatus in this embodiment of this application may be the network device, the chip (system) in the network device, the terminal device, or the chip (system) in the terminal in FIG. 1, FIG. 2A, FIG. 2B, FIG. 2C, or FIG. 2D.

When the first apparatus may be the terminal device or the chip (system) in the terminal shown in FIG. 1, FIG. 2A, FIG. 2B, FIG. 2C, or FIG. 2D, the third apparatus may be the terminal device, the chip (system) in the terminal, the network device, or the chip (system) in the network device shown in FIG. 1, FIG. 2A, FIG. 2B, FIG. 2C, or FIG. 2D. When the first apparatus may be the network device or the chip (system) in the network shown in FIG. 1, FIG. 2A, FIG. 2B, FIG. 2C, or FIG. 2D, the third apparatus may be the terminal device, the chip (system) in the terminal, the network device, or the chip (system) in the network device shown in FIG. 1, FIG. 2A, FIG. 2B, FIG. 2C, or FIG. 2D.

In this embodiment of this application, the second apparatus and the third apparatus may be same apparatuses, or may be two different apparatuses. The second apparatus may be the network device, the chip (system) in the network device, the terminal device, or the chip (system) in the terminal in FIG. 1, FIG. 2A, FIG. 2B, FIG. 2C, or FIG. 2D. For example, the second apparatus is the terminal device or the chip (system) in the terminal device, and the second apparatus may also have a function of configuring a related parameter for the first terminal. For example, the second apparatus is a road side unit (road side unit, RSU).

The location management apparatus in this embodiment of this application may be the location management device or the chip (system) in the location management device in FIG. 1, FIG. 2A, FIG. 2B, FIG. 2C, or FIG. 2D. The location management device may include one or more of an LMF, an LMC, or an LLMF.

The following first describes names or terms in embodiments of this application.

(1) Positioning reference signal.

A target signal, a first signal, and a second signal in embodiments of this application may be understood as signals that can be used for positioning. The target signal, the first signal, and the second signal in embodiments of this application may also be referred to as positioning signals. For differentiation, for example, the target signal may be referred to as a target positioning signal, the first signal may be referred to as a first positioning signal, and the second signal may be referred to as a second positioning signal.

One or more of the target signal, the first signal, and the second signal in embodiments of this application may be a positioning reference signal (positioning reference signal, PRS), may be a sounding reference signal (sounding reference signal, SRS), or may be one or more of a channel state information reference signal (channel state information reference signal, CSI-RS), a demodulation reference signal (demodulation reference signal, DMRS), a phase-tracking reference signal (phase-tracking reference signal, PTRS), a sidelink positioning reference signal (sidelink positioning reference signal, SL-PRS), and a synchronization signal and physical sidelink broadcast channel block (synchronization signal and physical sidelink broadcast channel block, SSB).

The solutions provided in embodiments of this application are applicable to transmission that is of a signal used for positioning and that is between two apparatuses, for example, transmission that is of a signal used for positioning and that is between a first apparatus and a third apparatus. Each of the two apparatuses may be a terminal device or a chip (system) in the terminal device. In this case, it may also be understood that the solutions provided in embodiments of this application are also applicable to a sidelink (sidelink).

The sidelink (sidelink, SL) in embodiments of this application may also be referred to as a side link, a sidelink, a direct link, a side-link, a secondary link, or the like. In embodiments of this application, each of the foregoing terms refer to a link established between devices of a same type, and have a same meaning. A link established between devices of a same type may be a link between terminal devices, or the like. For the link between the terminal devices, there is a D2D link defined in 3GPP Release (Rel)-12/13, and there is also a V2X link that is between vehicles, between a vehicle and a mobile phone, or a vehicle and any entity and that is defined by the 3GPP for an internet of vehicles. The V2X link includes a V2X link defined in 3GPP Rel-14/15, and further includes, for example, an NR system-based V2X link in Rel-16 and subsequent releases that are currently being researched by the 3GPP.

**(2) Spatial relation**

The spatial relation in embodiments of this application may be a spatial relationship (spatial relation). In embodiments of this application, a spatial relation between two signals (for example, a spatial relation between a first signal and a target signal, a spatial relation between a second signal and the target signal, a spatial relation between the first signal and a first path of the target signal, and a spatial relation between the second signal and a second path of the target signal that are involved subsequently) may be a relation between the two signals during propagation of the two signals in space. The spatial relation in embodiments of this application may also be replaced with another name, for example, a beam, a beam direction, a sending direction, a transmit beam direction, a receiving direction, or a receive beam direction.

In embodiments of this application, a spatial relation association between two signals (for example, a spatial relation association between a first signal and a target signal, a spatial relation association between a second signal and the target signal, a spatial relation association between the first signal and a first path of the target signal, and a spatial relation association between the second signal and a second path of the target signal that are subsequently involved) may mean that directions of the two signals are consistent or close during propagation of the two signals in space. The spatial relation association between the two signals in embodiments of this application may alternatively mean that there is an association relation between a transmit beam or a receive beam of one signal and a transmit beam or a receive beam of the other signal in space. For example, beam directions of the transmit beam or the receive beam of the signal and the transmit beam or the receive beam of the other signal are consistent or close.

**(3) Information about an angle of arrival**

**(3.1) Calculation method of the angle of arrival**

An example in which a third apparatus measures a signal from a first apparatus to obtain information about an angle of arrival is used below for description. A solution in which the first apparatus obtains information about an angle of arrival by measuring a signal from the third apparatus is similar to this solution. Details are not described again.

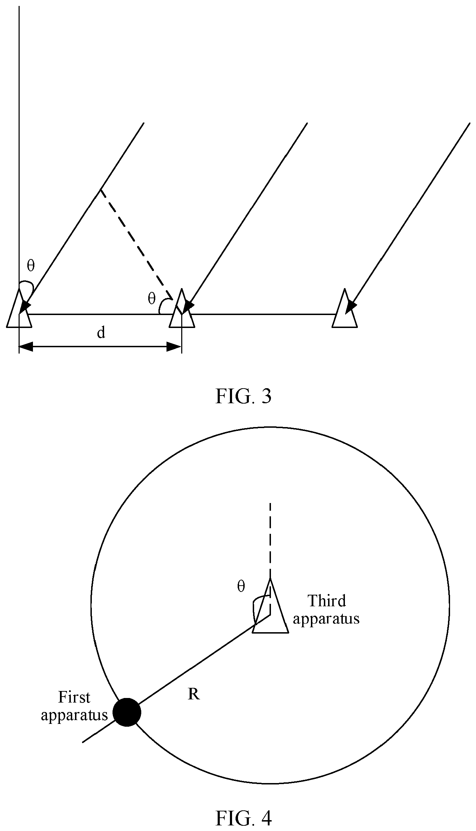

The third apparatus may estimate an angle of arrival by using a phase difference between a plurality of antenna array elements. **FIG. 3** is an example of a diagram of a principle of determining information about an angle of arrival according to an embodiment of this application. For example, a third apparatus measures a signal sent by a first apparatus to determine an angle of arrival. As shown in FIG. 3, the third apparatus may include a plurality of antenna array elements (for example, may include two or more antenna array elements, where the antenna array element may also be referred to as an array antenna). Generally, assuming that a distance between the first apparatus and the third apparatus is enough long, propagation paths of the signal sent by the first apparatus into each antenna array element of the third apparatus may be considered as parallel. In this way, in a possible implementation, the angle of arrival may be calculated by using the following formula (1) and formula (2):

$$\psi = e^{-j\omega\tau} = e^{-j\omega\frac{d\sin\theta}{c}} \qquad \text{Formula (1)}$$

$$\tau = \frac{d\sin\theta}{c} \qquad \text{Formula (2)}$$

In the foregoing formula (1) and formula (2), $\psi$ is a phase difference between the antenna array elements, $\theta$ is the angle of arrival of the signal sent by the first apparatus, $d$ is a distance between the antenna array elements, $c$ is a speed of light, $\tau$ is a wave path difference between the signal sent by the first apparatus and the antenna array element, and $e^{-j\omega}$ may be a preset constant.

**(3.2)** Information about the angle of arrival

In embodiments of this application, the information about the angle of arrival includes at least one of the following three pieces of content: an azimuth angle of arrival (azimuth angle of Arrival, AOA) and/or a zenith angle of arrival (zenith angle of arrival, ZOA).

In embodiments of this application, the information about the angle of arrival may further include information about a coordinate system, which may be a global coordinate system (Global Coordinate System, GCS) or a local coordinate system (Local Coordinate System, LCS). The global coordinate system is a coordinate system of three-dimensional space in which an object is located. In the local coordinate system, a center of an object is used as a coordinate origin in the coordinate system, and operations such as rotation or translation of the object are performed around the local coordinate system. In this case, when an operation such as rotation or translation is performed on an object model, a corresponding rotation or translation operation is also performed on the local coordinate system.

When an angular coordinate system is the GCS, an azimuth angle of arrival may be an included angle between an incident angle direction and a due north direction or an included angle between a projection of the incident angle direction on a horizontal plane and the due north direction, and a ZOA may be an included angle between the incident angle direction and a zenith direction. When an angular coordinate system is the LCS, an azimuth angle of arrival may be an included angle between a projection of an incident angle direction on an x-y plane of the rectangular coordinate system and a due north direction, and a ZOA may be an included angle between the incident angle direction and a z-axis.

In the foregoing possible implementation, when the information about the angle of arrival does not include the angle coordinate system (for example, the information about the angle of arrival includes only the azimuth angle of arrival, or includes only the ZOA), in this implementation, a default coordinate system may be used. For example, a default coordinate system may be defined for each of the azimuth angle of arrival and the ZOA. The default coordinate system defined for the azimuth angle of arrival may be a coordinate system of the GCS, or may be a coordinate system of the LCS. The default coordinate system defined for the ZOA may be a coordinate system of the GCS, or may be a coordinate system of the LCS.

For example, the azimuth angle of arrival in the information about the angle of arrival may be an included angle, at an end of the third apparatus, between the due north direction and a projection of a signal transmission path between the third apparatus and the first apparatus on the horizontal plane. The ZOA included in the information about the angle of arrival may specifically be an included angle, at the end of the third apparatus, between the zenith direction and the projection of the signal transmission path between the third apparatus and the first apparatus on the horizontal plane.

**(3.3)** RTT

The RTT may be understood as a loopback time of a signal between two apparatuses.

For example, the third apparatus sends a signal $a_1$ (where the signal a1 is, for example, a positioning reference signal (positioning reference signal, PRS)) to the first apparatus, the third apparatus records a transmitting time t0 of the signal a1 by using a local clock of the third apparatus, and the first apparatus measures a time of arrival t1 of the signal a1 by using a local clock of the first apparatus.

After receiving the signal a1, the first apparatus sends a signal a2 (where the signal a2 is, for example, a sounding reference signal (sounding reference signal, SRS)) to the third apparatus, the first apparatus records a transmitting time t2 of the signal a2 by using the local clock of the first apparatus, and the third apparatus measures a time of arrival t3 of the signal a2 by using the local clock of the third apparatus. An RTT of signal transmission between the first apparatus and the third apparatus is [(t3-t0)-(t2-t1)].

A possible positioning solution is described below. In the positioning solution, an RTT positioning technology and an angle of arrival positioning technology are used for positioning. FIG. 4 is an example of a diagram of a principle of performing positioning by using an RTT positioning technology and an angle of arrival positioning technology according to an embodiment of this application. As shown in FIG. 4, an RTT is obtained through signal transmission between a third apparatus and a first apparatus, and then it may be determined that a value of a distance R between the third apparatus and the first apparatus is (RTT×c/2), where c is a speed of light, × represents multiplication, and / represents division. Therefore, it may be determined that the first apparatus is located on a circle that uses the third apparatus as a circle center and uses R as a radius. In addition, the third apparatus measures a signal from the first apparatus, to obtain information about an angle of arrival. A ray may be determined by using the information about the angle of arrival, where the ray uses the third apparatus as a start point, and an included angle between the ray and the third apparatus is an angle of arrival $\theta$. An

intersection point between the ray and the circle with the radius of R is a location of the first apparatus.

The positioning solution can implement single-site positioning, in other words, one third apparatus (in other words, a plurality of third apparatuses are not required) can implement positioning of the first apparatus. The solutions provided in embodiments of this application may also be applied to a scenario in which a first apparatus is positioned by using a plurality of third apparatuses. In this scenario, the solution, on a side of the third apparatus, provided in embodiments of this application can be applied on all or some of the plurality of third apparatuses.

In a process of positioning, by using the positioning technology, an apparatus that needs to be positioned, an apparatus participating in a positioning procedure needs to send a signal, and a measurement result of the signal may be used to position the apparatus that needs to be positioned. How to configure a first signal becomes a problem to be urgently resolved. The following describes two possible implementations provided in embodiments of this application. In the following implementation 1, a second apparatus may configure, as a path level, a spatial relation of a signal that is of the first apparatus and that is used for positioning. In the following implementation 2, the second apparatus may configure, for the first apparatus, a plurality of signals used for positioning, and spatial relations of at least two of the plurality of signals used for positioning may be associated with different paths of a same signal.

**Implementation 1:** The second apparatus may configure, as a path level, a spatial relation of a signal that is of the first apparatus and that is used for positioning.

For example, the second apparatus may configure a signal (for example, a first signal) that is of the first apparatus and that is used for positioning. If the second apparatus configures a spatial relation of the first signal as a signal level, for example, a third apparatus configures the spatial relation of the first signal as a target signal. In this case, a probability that a beam of the first signal sent by the first apparatus does not face a path of the target signal is high, and a probability that an obstacle is encountered on a transmission path of the first signal is high. Consequently, there is a high probability that a measurement result obtained by measuring the received first signal by the third apparatus has low precision, and there is a high probability that positioning accuracy of the first apparatus is low.

For the foregoing problem, embodiments of this application provide a possible implementation. In this implementation, the spatial relation configured by the second apparatus for the first apparatus is at a level of a path of a signal. For example, the third apparatus configures the spatial relation of the first signal as a path of the target signal. In this case, a beam of the first signal sent by the first apparatus faces the path of the target signal, and a probability that an obstacle is encountered on a transmission path of the first signal is low. Therefore, precision of a measurement result obtained by measuring the received first signal by the third apparatus is high, so that positioning accuracy can be improved.

**Implementation 2:** The second apparatus may configure, for the first apparatus, a plurality of signals used for positioning, and spatial relations of at least two of the plurality of signals used for positioning may be associated with different paths of a same signal.

For example, a third apparatus sends a target signal to the first apparatus, the third apparatus records a transmitting time of the target signal by using a local clock of the third apparatus, and the first apparatus measures a time of arrival of the target signal by using a local clock of the first apparatus. After receiving the target signal, the first apparatus sends a first signal to the third apparatus. The first apparatus records a transmitting time of the first signal by using the local clock of the first apparatus, and the third apparatus measures a time of arrival of the first signal by using the local clock of the third apparatus. An RTT of signal transmission between the first apparatus and the third apparatus is [(Time of arrival of the first signal-Transmitting time of the target signal)-(Transmitting time of the first signal-Time of arrival of the target signal)].

In the foregoing example, a transmission delay exists in a process of obtaining the RTT of the signal transmission between the first apparatus and the third apparatus, and the transmission delay causes a positioning deviation. For example, the transmission delay is a delay at a nanosecond level. In a positioning process, a transmission delay of 1 nanosecond may cause a deviation of determined location information to be about 0.3 m.

To reduce impact of a transmission delay of an RTT on positioning precision, embodiments of this application provide a possible implementation. In this implementation, a second apparatus may configure a plurality of signals for a first apparatus, and spatial relations of at least two of the plurality of signals may be configured as different paths of a same signal. For example, the second apparatus configures a first signal and a second signal for the first apparatus, where a spatial relation of the first signal is a first path of a target signal, and a spatial relation of the second signal is a second path of the target signal. A third apparatus sends the target signal to the first apparatus, the third apparatus records a transmitting time of the target signal by using a local clock of the third apparatus, and the first apparatus measures a time of arrival of the target signal by using a local clock of the first apparatus. After receiving the target signal, the first apparatus sends the first signal and the second signal to the third apparatus. The first apparatus records a transmitting time of the first signal by using the local clock of the first apparatus, and the third apparatus measures a time of arrival of the first signal by using the local clock of the third apparatus. $RTT_1$ of signal transmission between the first apparatus and the third apparatus is [(Time of arrival of the first signal-Transmitting time of the target signal)-(Transmitting time of the first signal-Time of arrival of the target signal)]. The first apparatus records a transmitting time of the second signal by using the local clock of the first apparatus, and the third apparatus measures a time of arrival of the second signal by using the local clock of the third apparatus. $RTT_2$ of signal transmission between the first apparatus and the third apparatus is [(Time of arrival of the second signal-Transmitting time of the target signal)-(Transmitting time of the second signal-Time of arrival of the target signal)]. The $RTT_1$ and the $RTT_2$ may be combined to determine location information of the first apparatus. In addition, in a solution in which the location information of the first apparatus is determined by combining the two RTTs, impact of a transmission delay on positioning precision can be reduced, so that positioning accuracy is improved.

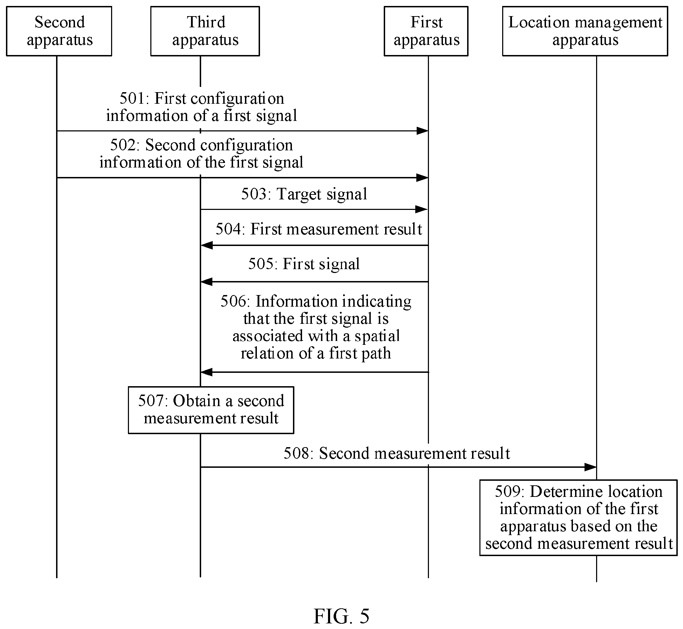

Based on the embodiments shown in FIG. 1, FIG. 2A, FIG. 2B, FIG. 2C, FIG. 2D, FIG. 2E, FIG. 3, and FIG. 4 and the foregoing other content, FIG. 5 is an example of a schematic flowchart of a communication method according to an embodiment of this application. For ease of understanding of this application, interaction between a first apparatus, a second apparatus, a third apparatus, and a location management apparatus is described in FIG. 5. In FIG. 5, the first apparatus, the second apparatus, the third apparatus, and the location management apparatus may be the first apparatus, the second apparatus, the third apparatus, and the location management apparatus in FIG. 4. For related descriptions, refer to the foregoing content. Details are not described again.

As shown in FIG. 5, the method includes the following steps.

**Step 501:** The second apparatus sends first configuration information of a first signal.

Correspondingly, the first apparatus receives the first configuration information of the first signal.

In embodiments of this application, the first signal is used to determine location information of the first apparatus. The first signal may be the foregoing signal used for positioning. For a related example, refer to the foregoing descriptions. Details are not described herein again.

The first configuration information of the first signal indicates that the first signal is associated with a spatial relation of a target signal. In embodiments of this application, that the first signal is associated with a spatial relation of a target signal may also be referred to as that a spatial relation of the first signal and the target signal are associated (or have an association relation), or may be referred to as that a spatial relation of the first signal and a spatial relation of the target signal are associated (or have an association relation).

In embodiments of this application, that the first signal is associated with the spatial relation of the target signal may also be understood as a spatial association relation between a propagation direction of the first signal and the target signal, that an association relation exists between a sending direction of the first signal and a direction in which the target signal is received (for example, the two directions are consistent or close), that a transmit beam direction of the first signal and a propagation direction of the target signal are associated (for example, the two directions are consistent or close), or that a transmit beam direction of the first signal and a transmit beam direction of the target signal are associated (for example, the two directions are consistent or close).

In a possible implementation, the first configuration information includes identification information of the target signal. In this way, the first apparatus may determine, based on the identification information of the target signal, that the spatial relation of the first signal is associated with the spatial relation of the target signal.

In another possible implementation, the first configuration information of the first signal includes spatial relation configuration information, the spatial relation configuration information is used to configure the spatial relation of the first signal, English of the spatial relation configuration information may be, for example, spatial relation information, and the spatial relation configuration information may include the identification information of the target signal. In this way, if determining that the identification information of the target signal exists in the spatial relation configuration information included in the first configuration information, the first apparatus may determine that the spatial relation of the first signal is associated with the spatial relation of the target signal.

In embodiments of this application, the target signal may be used to position the first apparatus. The target signal may be the foregoing signal used for positioning. For a related example, refer to the foregoing descriptions. Details are not described herein again.

In embodiments of this application, the identification information of the target signal may include information that can indicate the target signal, for example, may include one or more of resource information of the target signal, a cell index corresponding to the target signal, an index of the target signal, or configuration information of the target signal. For example, if the target signal is an SSB, the identification information of the target signal may include one or more of a cell index, an SSB index, and SSB configuration information. For another example, if the target signal is a PRS, the identification information of the target signal may include one or more of an identifier of the PRS, a resource set index of the PRS, or a resource index of the PRS.

**Step 502:** The second apparatus sends second configuration information of the first signal.

Correspondingly, the first apparatus receives the second configuration information. The second configuration information indicates that the first signal is associated with a spatial relation of a path of the target signal.

In embodiments of this application, the second apparatus may configure, for the first apparatus, information indicating that a signal is associated with a spatial relation of a path. The second apparatus may configure, for the first apparatus, a path associated with a spatial relation of one signal, or may configure a path associated with a spatial relation of each of a plurality of signals. The following describes two possible implementations by using examples of an implementation A1 and an implementation A2.

In the implementation A1, when the second apparatus determines that a spatial relation of one signal needs to be associated with a path, the second apparatus may indicate information about a path associated with the spatial relation of the signal. For example, the second configuration information indicates that the first signal is associated with a spatial relation of a first path of the target signal. When the second apparatus determines that a spatial relation of one signal does not need to be associated with a path, the second apparatus may not indicate information about the path associated with the spatial relation of the signal. In this way, when determining that the second apparatus does not indicate the information about the path associated with the spatial relation of the signal, the first apparatus determines that the spatial relation of the signal does not need to be associated with the path.

In the implementation A2, the second apparatus may set path switch information, and the path switch information may indicate whether a spatial relation of a signal needs to be associated with a path. In this way, when determining, based on the path switch information, that a spatial relation of one signal needs to be associated with a path, the first apparatus may determine the path that needs to be associated with the spatial relation of the signal. In this manner, the second apparatus may not indicate information about the path associated with the spatial relation of the signal.

**Implementation A1:** When the second apparatus determines that a spatial relation of one signal needs to be associated with a path, the second apparatus may indicate information about the path associated with the spatial relation of the signal.

**Implementation A1-1:** The second apparatus configures a first signal for the first apparatus.

For example, the second apparatus determines that a spatial relation of the first signal needs to be associated with a first path of a target signal, and the second apparatus may send second configuration information to the first apparatus. The second configuration information may indicate information about a path that is of the target signal and that is associated with the spatial relation of the first signal. For example, the second configuration information indicates that the first signal is associated with a spatial relation of the first path of the target signal.

In a possible implementation, the second configuration information includes information about the first path. In this way, the first apparatus may determine, based on the information that is about the first path and that is included in the second configuration information, that the spatial relation of the first signal needs to be associated with the first path of the target signal.

In another possible implementation, the second configuration information in this application may be carried in one or more of the following content: information used to configure the spatial relation of the first signal, information used to configure a resource of the first signal, or information used to configure a resource set of the first signal. In this way, a location of the second configuration information may be flexibly set based on an actual requirement. In addition, this can be more compatible with the conventional technology.

For example, the second configuration information may be located in first configuration information. For example, the first configuration information of the first signal includes spatial relation configuration information. The spatial relation configuration information may be written as spatial relation information in English. The spatial relation configuration information is used to configure the spatial relation of the first signal, and the spatial relation configuration information may include identification information of the target signal and the information about the first path. In this way, if determining that the identification information of the target signal and the information about the first path exist in the spatial relation configuration information included in the first configuration information, the first apparatus may determine that the spatial relation of the first signal is associated with the spatial relation of the first path of the target signal.

In embodiments of this application, there are a plurality of possible choices for the path associated with the spatial relation of the signal. For example, the first path is a $1^{st}$ path (first path), and the information that about of the first path and that is included in the second configuration information may be information indicating the $1^{st}$ path. Alternatively, the first path is another path. In embodiments of this application, the another path may alternatively be replaced with an additional path (additional path). The information that is about the first path and that is included in the second configuration information may be information indicating the another path. The another path is a path other than the $1^{st}$ path. The $1^{st}$ path may be understood as an earliest path received by the first apparatus in paths corresponding to the target signal. For example, the $1^{st}$ path may be a line of sight (line of sight, LOS).

For another example, the first path is a direct path or a reflection path of the target signal. The target signal may be propagated through a line of sight (line of sight, LOS) path (to be specific, a straight-line distance between a terminal device and a gNB). Because of existence of an obstacle (for example, a tree, a building, or a wall), a positioning signal is reflected. Therefore, the target signal is also propagated through a non-line of sight (non-line of sight, NLOS) path. The NLOS path may be considered as a reflection path.

For another example, the first path is a path that is in the paths corresponding to the target signal and whose receiving time ranks $N_1^{th}$, where $N_1$ is a positive integer. For example, the first apparatus may determine receiving times of the paths of the target signal, and sort the paths by receiving times from earliest to latest. For example, the first path may be a path whose receiving time is earliest.

For another example, the first path is a path that is in the paths corresponding to the target signal and whose energy ranks $M_1^{th}$, where $M_1$ is a positive integer. For example, the first apparatus may determine signal strength values (where the signal strength value may also be referred to as a capability) corresponding to the paths of the target signal, and sort the paths in descending order of the signal strength values. For example, the first path may be a path with a strongest signal strength value.

It can be learned that the plurality of paths of the target signal may be distinguished according to a specific rule. For example, the plurality of paths may be classified based on a path type (for example, whether the path is a reflection path or a direct path), may be sorted based on the receiving times of the paths, or may be sorted based on energy of the paths. The first path may be a path determined according to these rules. For example, the second apparatus may configure, for the first apparatus, a path associated with the spatial relation of the first signal as a $1^{st}$ path of the target signal, where the $1^{st}$ path may be considered as a path whose receiving time is earliest. In this case, the first apparatus may associate the spatial relation of the first signal with the $1^{st}$ path of the target signal. For another example, the second apparatus may indicate to the first apparatus that the spatial relation of the first signal is associated with the path of the target signal. In this case, the first apparatus may select a path from the paths of the target signal (for example, select a $1^{st}$ path, select a path whose energy ranks first, or select a path whose energy ranks second), and associate a spatial relation of the path with the first signal. In this way, solution flexibility can be improved.

In embodiments of this application, configuration information of the signal may further include some other information. The following uses configuration information of the first signal as an example to describe possible examples of several types of configuration information. The examples are also applicable to subsequent configuration information of another signal, for example, configuration information of a second signal.

In a possible implementation, the configuration information of the first signal includes, for example, information about a reference signal of a serving cell, for example, an identifier of the serving cell and the information about the reference signal. The information about the reference signal (for example, may be considered as the first configuration information) may indicate a type of a reference signal associated with a spatial relation of a signal sent by the first apparatus in the serving cell, identification information of the reference signal, and the like. The identification information of the reference signal may be, for example, an index, a resource index, or resource set information of the reference signal. The second configuration information may be configured in the information about the reference signal of the serving cell. For example, the information about the reference signal of the serving cell further includes the information about the first path.

In another possible implementation, the configuration information of the first signal includes, for example, SSB information. The SSB information includes, for example, an ID of a neighboring cell, an SSB index, and an SSB configuration. The SSB information (for example, one or both of the SSB index and the SSB configuration may be considered as the first configuration information) may indicate that a reference signal associated with a spatial relation of a signal sent by the first apparatus in the neighboring cell is an SSB indicated by the SSB index and the SSB configuration. The second configuration information may be configured in the SSB information of the neighboring cell. For example, the SSB information of the neighboring cell further includes the information about the first path.

In still another possible implementation, the configuration information of the first signal includes, for example, PRS information. The PRS information includes, for example, a PRS ID, a PRS resource set index, and a PRS resource index. The PRS ID, the PRS resource set index, and the PRS resource index (for example, one or more of the PRS ID, the PRS resource set index, and the PRS resource index may be considered as the first configuration information) may indicate that a reference signal associated with a spatial relation of a signal sent by the first apparatus in a neighboring cell is a PRS indicated by the PRS ID, the PRS resource set index, and the PRS resource index. The second configuration information may be configured in the PRS information of the neighboring cell. For example, the PRS information of the neighboring cell further includes the information about the first path.

**Implementation A1-2:** The second apparatus configures a plurality of signals (for example, a first signal and a second signal) for the first apparatus.

In this embodiment of this application, the second apparatus may also configure the plurality of signals for the first apparatus, for example, separately configure the first signal and the second signal. The second apparatus sends third configuration information to the first apparatus, where the third configuration information is used to configure that a spatial relation of the second signal is associated with a target signal. Content of the third configuration information is similar to the content of the first configuration information. Details are not described. The second apparatus determines that the spatial relation of the second signal needs to be associated with a second path of the target signal, and the second apparatus may send fourth configuration information to the first apparatus. The fourth configuration information may indicate information about a path that is of the target signal and that is associated with the spatial relation of the second signal. For example, the second configuration information indicates that the second signal is associated with a spatial relation of the second path of the target signal.

The second path is different from a first path. There may be a plurality of cases for the second path. For example, the second path may be a $1^{st}$ path (in this case, the first path is not the $1^{st}$ path), another path, a direct path, a reflection path, a path whose receiving time ranks $N_2^{th}$ in paths corresponding to the target signal, or a path whose energy ranks $M_2^{th}$ in the paths corresponding to the target signal, where $N_2$ is a positive integer, and $M_2$ is a positive integer. Related content is similar to related content of the first path. Details are not described again.

In a possible implementation, the fourth configuration information includes information about the second path. In this way, the first apparatus may determine, based on the information that is about the second path and that is included in the second configuration information, that a spatial relation of the first signal needs to be associated with the first path of the target signal.

In another possible implementation, the fourth configuration information in this application may be carried in one or more of the following content: information used to configure the spatial relation of the second signal, information used to configure a resource of the second signal, or information used to configure a resource set of the second signal. In this way, a location of the second configuration information may be flexibly set based on an actual requirement. In addition, this can be more compatible with the conventional technology.

For example, the fourth configuration information may be located in the third configuration information. For example, the third configuration information of the second signal includes spatial relation configuration information. The spatial relation configuration information may be written as spatial relation information in English. The spatial relation configuration information is used to configure the spatial relation of the second signal, and the spatial relation configuration information may include identification information of the target signal and the information about the second path. In this way, if determining that the identification information of the target signal and the information about the second path exist in the spatial relation configuration information included in the first configuration information, the first apparatus may determine that the spatial relation of the second signal is associated with the spatial relation of the second path of the target signal.

In a possible implementation, the first path is the 1st path, and the information that is about the first path and that is included in the second configuration information may be information indicating the 1st path. The second path is another path, and the information that is about the second path and that is included in the fourth configuration information may be information indicating the another path. The another path is a path other than the 1st path. In this case, the second apparatus may select, from other paths than the 1st path by itself or according to a default rule, a path to associate with the spatial relation of the second signal.

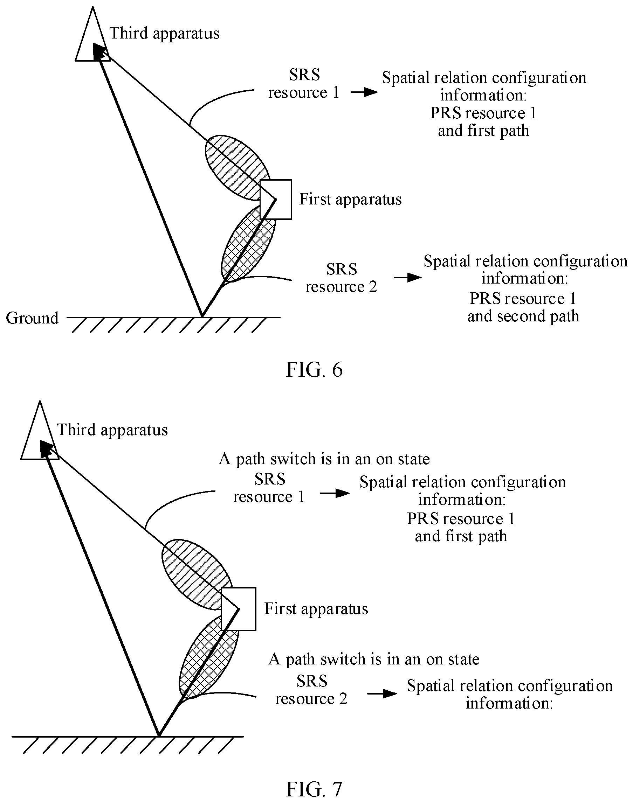

FIG. 6 is an example of a possible diagram of configuration information of signals configured by a second apparatus for a first apparatus according to an embodiment of this application. As shown in FIG. 6, the second apparatus configures a first signal and a second signal for the first apparatus, a resource of the first signal is an SRS resource 1, and spatial relation configuration information of the first signal includes a PRS resource 1 and a first path. The first path included in the spatial relation configuration information of the first signal may be, for example, information indicating a 1st path. The spatial relation configuration information indicates that an SRS sent by the first apparatus on the SRS resource 1 is associated with a spatial relation of the first path of a signal corresponding to the PRS resource 1. A resource of the second signal is an SRS resource 2, and spatial relation configuration information of the second signal includes the PRS resource 1 and a second path. The second path included in the spatial relation configuration information of the second signal may be, for example, information indicating another path. The spatial relation configuration information indicates that an SRS sent by the first apparatus on the SRS resource 2 is associated with a spatial relation of the second path of the signal corresponding to the PRS resource 1. The first path is, for example, a 1st path (or a direct path) corresponding to the PRS resource 1, and the second path is, for example, a reflection path (a ground reflection path in bold in the figure) of the signal corresponding to the PRS resource 1 of the second signal.

In another possible implementation, the fourth configuration information may indicate a specific path in other paths as the second path. For example, the fourth configuration information indicates that the second path is a path that is in all paths of the target signal and whose receiving time ranks second, or indicates that the second path is a path that is in all paths of the target signal and whose energy ranks second.

In embodiments of this application, content of the fourth configuration information is similar to the content of the second configuration information. Details are not described again.

**Implementation A1-3:** The second apparatus configures more than two signals for the first apparatus.

In embodiments of this application, the second apparatus may configure more than two signals for the first apparatus. For example, the second apparatus configures a first signal, a second signal, and a third signal for the first apparatus.

In a possible implementation, the second apparatus may indicate, to the first apparatus, that a spatial relation of the first signal is associated with a first path (for example, a 1st path), the second apparatus indicates, to the first apparatus, that a spatial relation of the second signal is associated with a second path (for example, the second path is another path) (for example, information used to configure a path included in the spatial relation of the second signal is information indicating the another path), and a spatial relation of the third signal is associated with a third path (for example, the third path is another path) (for example, information used to configure a path included in the spatial relation of the second signal is information indicating the another path). In this implementation, information about the second path and information about the third path that are sent by the second apparatus to the first apparatus are the same. In this way, the first apparatus may associate the first signal with the first path, and the first apparatus may determine, by itself or according to a preset rule, a path associated with the spatial relation of the second signal and the spatial relation of the third signal from other paths than the first path.

A path associated with the spatial relation of the second signal may be different from a path associated with the spatial relation of the third signal. In this way, measurement results corresponding to more paths can be provided, and positioning precision can be further improved. Alternatively, a path associated with the spatial relation of the second signal may be the same as a path associated with the spatial relation of the third signal. In this way, a more accurate measurement result corresponding to the path may be obtained by using measurement results corresponding to a plurality of signals on the path, so that positioning precision is improved.

In another possible implementation, when the second apparatus configures two or more signals for the first apparatus, in addition to indicating information about a first path associated with a spatial relation of the first signal, for some or all of remaining signals, the second apparatus may indicate information about a specific path associated with a spatial relation of each of the some or all of the signals (for example, the second apparatus sends identification information of the path to the first apparatus). To be specific, the first apparatus may uniquely determine a second path based on information that is about the second path (for example, identification information of the second path) and that is sent by the second apparatus, and may uniquely determine a third path based on information about the third path (for example, identification information of the third path). The second path and the third path may be the same or may be different. For example, the second apparatus may indicate, to the first apparatus, that the second signal is associated with a spatial relation of a path whose receiving time ranks second in paths corresponding to a target signal, and indicate that the third signal is associated with a spatial relation of a path whose receiving time ranks third in the paths corresponding to the target signal.

**Implementation 2:** The second apparatus may set path switch information, and the path switch information may indicate whether a spatial relation of a signal needs to be associated with a path.

In the implementation A2, it may also be understood that the second apparatus may set path switch information for a first signal of the first apparatus. If the path switch information indicates that a path switch is in an on state, it indicates that a spatial relation of the first signal needs to be associated with a path of a target signal. If the path switch information indicates that the path switch is in an off state, it indicates that the spatial relation of the first signal needs to be associated with the target signal, and does not need to be associated with the path of the target signal.

In the implementation A2, when the path switch information indicates that the path switch is in the on state, the first apparatus may select a path associated with the spatial relation of the first signal. In another possible implementation, when the path switch information indicates that the path switch is in the on state, the first apparatus may select, according to a preset rule, a path associated with the spatial relation of the first signal. For example, the first apparatus determines, according to the preset rule, that the spatial relation of the first signal is associated with a first path of the target signal. The first path may be, for example, a $1^{st}$ path, a reflection path, or a direct path determined according to the preset rule.

The following describes several manners of setting the path switch information by using an example A2-1, an example A2-2, and an example A2-3.

**Example A2-1:** The second apparatus indicates, depending on whether a message carries first preset information, whether the path switch is in the on state or the off state.

The first preset information may be used as the path switch information. For example, if the first preset information exists in a message, the first apparatus may determine that the path switch is in the on state. In another possible implementation, if the first preset information does not exist in a message, the first apparatus may determine that the path switch is in the off state.

The first preset information may be, for example, an information element, and the information element may be referred to as an information element for short. In a possible implementation, first configuration information and second configuration information may be carried in a same message. When the message carrying the first configuration information includes the first preset information (this may be understood as that the second configuration information includes the first preset information in the message carrying the first configuration information), the first apparatus may determine that the first signal is associated with a spatial relation of the path of the target signal.

In another possible implementation, when a message carrying first configuration information does not include the first preset information (or referred to as the information element), the first apparatus may determine that the message carrying the first configuration information does not include second configuration information, and the first apparatus may associate the first signal with a spatial relation of the target signal, in other words, the spatial relation of the first signal may not need to be associated with a level of the path of the target signal, that is, the path switch is in the off state.

**Example A2-2:** The second apparatus indicates, by using a preset bit value of a preset bit in a message, whether the path switch is in the on state or the off state.

For example, a first preset bit is preset in a message, and the first preset bit may include one bit, or may include a plurality of bits. For example, if the first preset bit is one bit, a first preset bit value may be defined as 1. When the bit value of the first preset bit in the message is 1, the first apparatus may determine that the path switch is in the on state. In another possible implementation, when the bit value of the first preset bit in the message is not the first preset value (for example, 0), the first apparatus may determine that the path switch is in the off state.

In a possible implementation, first configuration information and second configuration information may be carried in a same message. When a first preset bit in the message carrying the first configuration information carries a first preset bit value (this may be understood as that the second configuration information includes the first preset bit value carried on the first preset bit in the message carrying the first configuration information), the first apparatus may determine that the first signal is associated with a spatial relation of the path of the target signal.

In another possible implementation, when a value carried on the first preset bit in a message carrying first configuration information is not a first preset bit value, the first apparatus may determine that the message carrying the first configuration information does not include second configuration information, and the first apparatus may associate the first signal with a spatial relation of the target signal, in other words, the spatial relation of the first signal may not need to be associated with a level of the path of the target signal, that is, the path switch is in the off state.

**Example A2-3:** The second apparatus indicates, by using preset information on a preset bit in a message, whether the path switch is in the on state or the off state.

For example, a second preset bit is preset in a message, and the second preset bit may include one bit, or may include a plurality of bits. The second preset bit may carry preset information. For example, the preset information carried on the second preset bit is "on" or "enable". In this case, the first apparatus may determine that the path switch is in the on state.

In another possible implementation, when information carried on the second preset bit in the message is not the preset information, for example, the carried information is "on" or "disable", the first apparatus may determine that the path switch is in the off state.

In a possible implementation, first configuration information and second configuration information may be carried in a same message. When a second preset bit in the message carrying the first configuration information carries second preset information (this may be understood as that the second configuration information includes the second preset information carried on the second preset bit in the message carrying the first configuration information), the first apparatus may determine that the first signal is associated with a spatial relation of the path of the target signal.

In another possible implementation, when a value carried on the second preset bit in a message carrying first configuration information is not second preset information, the first apparatus may determine that the message carrying the first configuration information does not include second configuration information, and the first apparatus may associate the first signal with a spatial relation of the target signal, in other words, the spatial relation of the first signal may not need to be associated with a level of the path of the target signal, that is, the path switch is in the off state.

Content of the example A2-3 is slightly similar to that of the example A2-2. A difference lies in that in the example A2-2, the first apparatus may determine a path switch status by using the bit value of the first preset bit, and in the example A2-3, the first apparatus may determine a path switch status by using information obtained by decoding the bit value carried on the second preset bit.

In a possible implementation, in embodiments of this application, there are a plurality of choices for a location for carrying the path switch information (when the path switch information indicates that the path switch is in the on state, the path switch information is, for example, the second configuration information). For example, the path switch information (for example, the second configuration information) is carried in one or more of the following content: information used to configure the spatial relation of the first signal, information used to configure a resource of the first signal, or information used to configure a resource set of the first signal. In this way, a location of the second configuration information may be flexibly set based on an actual requirement. In addition, this can be more compatible with the conventional technology. The information used to configure the spatial relation of the first signal may be, for example, written as spatial relation information in English. When the first signal is an SRS, the information used to configure the resource of the first signal may be, for example, written as SRS resource configure in English. When the first signal is an SRS, the information used to configure the resource set of the first signal may be, for example, written as SRS resource set configure in English.

In another possible implementation, the second apparatus may configure a plurality of signals for the first apparatus. In a possible implementation, the second apparatus may configure a spatial relation for each signal, for example, configure, for each signal, path switch information of the signal. In another possible implementation, the second apparatus may configure one piece of path switch information for the plurality of signals. For example, the second apparatus configures a first signal and a second signal for the first apparatus, and the second apparatus configures one piece of path switch information. The piece of path switch information is path switch information of the first signal and the second signal, and the path switch information indicates that a path switch is in an on state. In this case, spatial relations of the first signal and the second signal are at a path level. For example, if the first signal is further associated with a spatial relation of a target signal, the first apparatus determines that the first signal is associated with a spatial relation of a path of the target signal. For another example, if the second signal is further associated with a spatial relation of a target signal, the first apparatus determines that the second signal is associated with a spatial relation of a path of the target signal.

In still another possible implementation, a plurality of signals to which path switch information is applicable may have a spatial relation with paths of different signals. For example, the second apparatus configures a first signal and a third signal for the first apparatus, and the second apparatus configures one piece of path switch information. The piece of path switch information is path switch information of the first signal and the third signal, and the path switch information indicates that a path switch is in an on state. In this case, spatial relations of the first signal and the third signal are at a path level. For example, if the first signal is further associated with a spatial relation of a target signal, the first apparatus determines that the first signal is associated with a spatial relation of a path of the target signal. For another example, if the third signal is further associated with a spatial relation of a fourth signal, the first apparatus determines that the third signal is associated with a spatial relation of a path of the fourth signal. For example, the first apparatus may associate the first signal with a 1st path of the target signal, and associate the third signal with a spatial relation of a 1st path of the fourth signal.

In embodiments of this application, when path switch information is applicable to a plurality of signals, for example, may be applicable to a signal corresponding to a resource in a resource set, the path switch information may be placed in information used to configure the resource set, for example, SRS resource set configure. For another example, when the path switch information is applicable to a plurality of signals, the path switch information may be placed in an area that carries common information, a special location is set to carry the information, or a signal to which the path switch information is applicable may be indicated by using one piece of indication information.

**FIG. 7** is an example of another possible diagram of configuration information of signals configured by a second apparatus for a first apparatus according to an embodiment of this application. As shown in FIG. 7, the second apparatus configures a first signal and a second signal for the first apparatus, a resource of the first signal is an SRS resource 1, and spatial relation configuration information of the first signal includes a PRS resource 1. The spatial relation configuration information indicates that an SRS sent by the first apparatus on the SRS resource 1 is associated with a spatial relation of a signal corresponding to the PRS resource 1. A resource of the second signal is an SRS resource 2, and spatial relation configuration information of the second signal includes the PRS resource 1. The spatial relation configuration information indicates that an SRS sent by the first apparatus on the SRS resource 2 is associated with the spatial relation of the signal corresponding to the PRS resource 1. The second apparatus further configures path switch information (for example, the information is an enable path spatial relation) for the first signal and the second signal, and the path switch information indicates that a path switch is in an on state. The first apparatus may determine specific two paths that are of the PRS resource 1 and whose spatial relations are respectively associated with the first signal and the second signal. For example, the first apparatus may determine that the first signal is associated with a direct path (or referred to as a 1st path) corresponding to the PRS resource 1, and that the second signal is associated with a spatial relation of a reflection path (a ground reflection path in bold in the figure) of the signal corresponding to the PRS resource 1. In another possible implementation, the first apparatus may determine, according to a preset rule, specific two paths that are of the PRS resource 1 and whose spatial relations are respectively associated with the first signal and the second signal. For example, the first apparatus determines, according to the preset rule, that the first signal is associated with a 1st path corresponding to the PRS resource 1, and that the second signal is associated with a spatial relation of a path whose receiving time ranks second in paths of the signal corresponding to the PRS resource 1.

**Step 503:** The third apparatus sends the target signal.

Correspondingly, the first apparatus receives the target signal.

In embodiments of this application, the second apparatus and the third apparatus may be same apparatuses. For example, both the second apparatus and the third apparatus are network devices, and the first apparatus is a terminal device. For another example, the second apparatus and the third apparatus may be two different apparatuses. For example, the first apparatus and the third apparatus are two terminal devices, and the second apparatus is a network device.

**Step 504:** The first apparatus sends a first measurement result.

Correspondingly, the third apparatus receives the first measurement result.

Step 504 is an optional step. The first apparatus may measure the target signal to obtain the first measurement result. The first measurement result includes a measurement result of the first path of the target signal. The first measurement result may be used to position the first apparatus. The first apparatus may report the first measurement result to the third apparatus or the location management apparatus. FIG. 5 is a diagram by using an example in which the first apparatus reports the first measurement result to the third apparatus.

The first measurement result may include some parameters used for positioning, and these parameters may correspond to a positioning technology. For example, when an RTT positioning technology is used to position the first apparatus, the first measurement result is used to determine a first RTT, and the first RTT is used to determine the location information of the first apparatus. For example, the first measurement result may include information about a time at which the first path of the target signal arrives at the first apparatus. For another example, the first measurement result may further include a sending time of the first signal, and the sending time of the first signal is used to determine the first RTT. For another example, the first measurement result may further include other information, for example, a phase difference and an angle of departure that correspond to the target signal. More measurement results can further improve positioning precision.

In a possible implementation, the first measurement result further includes the information about the first path. In this way, the apparatus receiving the first measurement result may determine that the first measurement result is obtained by measuring the first path of the target signal, so that positioning accuracy can be improved.

**Step 505:** The first apparatus sends the first signal.

Correspondingly, the third apparatus receives the first signal.

In step 505, the first apparatus may send the first signal based on the first configuration information and the second configuration information. For example, the first apparatus may determine the first path, and send the first signal based on the first path, where the first signal is associated with the spatial relation of the first path.

If the second apparatus sets the second configuration information in the manner in the implementation A1, the first apparatus may determine the first path based on the information that is about the first path and that is indicated by using the second configuration information. If the second apparatus sets the second configuration information in the manner in the implementation A2, the first apparatus may use the path of the target signal as the path associated with the spatial relation of the first signal, in other words, the first apparatus determines to select the path of the target signal as the first path.

For example, the third apparatus sends the target signal to the first apparatus, and the first apparatus measures the target signal in a plurality of beam directions. For example, the first apparatus obtains signal strengths of the first path and the second path through measurement by using a beam 1, and obtains signal strengths of the first path and the second path through measurement by using a beam 2. Two signal strengths of a same path that are obtained through measurement in two beam directions may be different. This is caused because the directions of the two beams are different. For example, a signal strength value that is of the first path and that is obtained through measurement by the first apparatus by using the beam 1 is b1, and a signal strength value that is of the first path and that is obtained through measurement by the first apparatus by using the beam 2 is b2, where b2 and b1 are different. If a direction of a beam and a direction of the path are more consistent, it indicates that a signal strength value obtained by measuring the path by using the beam is larger. In embodiments of this application, a signal strength value obtained by measuring each path is, for example, a reference signal received path power (reference signal received path power, RSRPP).

In a possible implementation, for the first path of the target signal, the first apparatus sends, by using a beam that has strong energy (a large signal strength value) and that corresponds to the first path, the first signal associated with the spatial relation of the first path, to associate the spatial relation of the first signal with the first path of the target signal.

For example, for a plurality of signal strength values obtained by measuring the first path by the first apparatus, a signal strength value obtained by measuring the first path by the first apparatus by using the beam 1 is largest. In this case, that when the first apparatus sends the first signal by using the beam 1, the beam of the first signal faces the first path may also be understood as that the first apparatus sends the first signal by using the beam 1, to associate the spatial relation of the first signal with the first path of the target signal.

**Step 506:** The first apparatus sends information indicating that the first signal is associated with the spatial relation of the first path.

Correspondingly, the third apparatus receives the information indicating that the first signal is associated with the spatial relation of the first path.

Step 506 is an optional step. The first apparatus may send, to the third apparatus, the information indicating that the first signal is associated with the spatial relation of the first path (this is used as an example in FIG. 5 for illustration); or may send, to the location management apparatus, the information indicating that the first signal is associated with the spatial relation of the first path.

In step 506, the first apparatus may report the spatial relation, at the path level, of the sent signal. For example, when the third apparatus is a network device, the first apparatus may send, to the third apparatus by using an RRC message, the information indicating that the first signal is associated with the spatial relation of the first path. For another example, the first apparatus may send, to the location management apparatus according to a long term evolution positioning protocol (long term evolution positioning protocol, LPP), the information indicating that the first signal is associated with the spatial relation of the first path.

In embodiments of this application, the information indicating that the first signal is associated with the spatial relation of the first path includes identification information of the first signal and the information about the first path.

In embodiments of this application, the second apparatus may also configure a plurality of signals for the first apparatus, for example, configure the first signal and the second signal, where the first signal and the second signal are respectively associated with spatial relations of the first path and the second path of the target signal. In this case, the first apparatus may report information indicating that each of the plurality of signals is associated with a spatial relation of a path.

For example, the first apparatus may perform reporting one by one for each signal, and the first apparatus may report the identification information of the first signal (where the first signal is an SRS, and the identification information of the first signal is, for example, an SRS resource identifier) and the information about the first path. The first apparatus may continue to report identification information of the second signal (where the second signal is an SRS, and the identification information of the second signal is, for example, an SRS resource identifier) and the information about the second path.

For another example, the first apparatus may report two lists, where one list includes identification information of signals, the other list includes information about paths, and sorting of elements in the two lists is in one-to-one correspondence. For example, if the identification information of the first signal is located at a 1st element of one list, the information about the first path is located at a 1st element of the other list; or if the identification information of the second signal is located at a 2nd element of one list, the information about the second path is located at a 2nd element of the other list.

For another example, the first apparatus may report a list including information about paths, and does not report a list including identification information of signals. Elements in the list including the information about the paths may be sorted according to a preset rule, so that the apparatus receiving the list can determine identification information of a signal corresponding to information about each path in the list. For example, the elements in the list including the information about the paths may be sorted in a preset order (for example, in ascending order or descending order) of resource identifiers of the signals corresponding to the paths. For example, a resource identifier of the first signal is 3, and a resource identifier of the second signal is 2. The list including the information about the paths may sequentially include the information about the second path and the information about the first path in ascending order of the resource identifiers.

Step 506 is an optional step. Alternatively, the first apparatus may not report the information about the path, and the third apparatus may not determine the information about the path corresponding to the received signal. In embodiments of this application, when the first apparatus does not report the information about the path, the third apparatus may alternatively determine, according to a preset rule, the information about the path corresponding to the received signal. For example, the third apparatus may obtain the configuration information of the first signal. The configuration information of the first signal may include resource information of the first signal and information about a path associated with the spatial relation of the first signal. Then, the third apparatus may determine, based on the received resource information of the first signal, information about a path corresponding to the resource information, and then determine the path associated with the spatial relation of the received signal.

**Step 507:** The third apparatus obtains a second measurement result.

In step 507, the third apparatus may measure the first signal, and determine the second measurement result based on a measurement result of the first signal. The second measurement result is used to determine a location of the first apparatus.

For example, the second measurement result may include information about an angle of arrival, and the information about the angle of arrival may include an angle of arrival in a horizontal direction of the first signal and/or an angle of arrival in a vertical direction of the first signal. In embodiments of this application, the angle of arrival in the horizontal direction may be an azimuth angle of arrival, and the angle of arrival in the vertical direction may be a ZOA. For another example, the second measurement result may include the first RTT, and the first RTT is an RTT corresponding to the target signal and the first signal. For example, the first RTT may be obtained by using [(Time of arrival of the first signal-Transmitting time of the target signal)-(Transmitting time of the first signal-Time of arrival of the first path of the target signal)]. When the second measurement result includes the information about the angle of arrival and the first RTT, the first apparatus may be positioned by using one third apparatus. In this way, single-site positioning can be implemented, and precision of the single-site positioning can be improved. The second measurement result may further include other information, for example, a relative time of arrival (relative time of arrival, RTOA) or a reference signal received power (reference signal received power, RSRP), to improve positioning precision.

In embodiments of this application, the third apparatus may send the second measurement result to the location management apparatus, so that the location management apparatus positions the first apparatus with reference to the second measurement result. In another possible implementation, the third apparatus may alternatively position the first apparatus with reference to the second measurement result, in other words, may not send the second measurement result. In FIG. 5, an example in which the third apparatus sends the second measurement result to the location management apparatus is used for illustration. For a solution in which the third apparatus positions the first apparatus based on the second measurement result, refer to a subsequent manner in which the location management apparatus positions the first apparatus based on the second measurement result. Details are not described herein.

**Step 508:** The third apparatus sends the second measurement result.

Correspondingly, the location management apparatus receives the second measurement result.

In a possible implementation, the second measurement result sent by the third apparatus may further include the information about the first path, to indicate the information about the path corresponding to the first measurement result. In this way, the third apparatus may notify the location management apparatus of the association relation between the second measurement result and the first path, so that the apparatus for positioning the first apparatus can perform positioning based on more information, to improve positioning precision.

In embodiments of this application, there are a plurality of manners in which the third apparatus determines that the second measurement result is associated with the first path. For example, the third apparatus may receive, from the first apparatus, the information indicating that the first signal is associated with the spatial relation of the first path, and then determine that the second measurement result corresponds to the first path. Alternatively, the third apparatus may obtain the configuration information of the first signal, where the configuration information of the first signal may include the resource information of the first signal and the information about the path associated with the spatial relation of the first signal, so that the third apparatus can determine, based on the received resource information of the signal, the information about the path corresponding to the resource information, and then determine the information about the path associated with the spatial relation of the received first signal.

**Step 509:** The location management apparatus determines the location information of the first apparatus based on the second measurement result.

In step 509, the location management apparatus may position the first apparatus based on the second measurement result. For example, in the solution described in FIG. 4, the location management apparatus may position the first apparatus based on the angle of arrival positioning technology and the RTT positioning technology. For a specific positioning principle, refer to related descriptions in FIG. 4. Details are not described again.

It can be learned from the solution shown in FIG. 5 that the spatial relation configured by the second apparatus for the first apparatus is at a level of a path of a signal. For example, the third apparatus configures the spatial relation of the first signal as the path of the target signal. In this case, a beam of the first signal sent by the first apparatus faces the path of the target signal, and a probability that an obstacle is encountered on a transmission path of the first signal is low. Therefore, precision of a measurement result obtained by measuring the received first signal by the third apparatus is high, so that positioning accuracy can be improved.

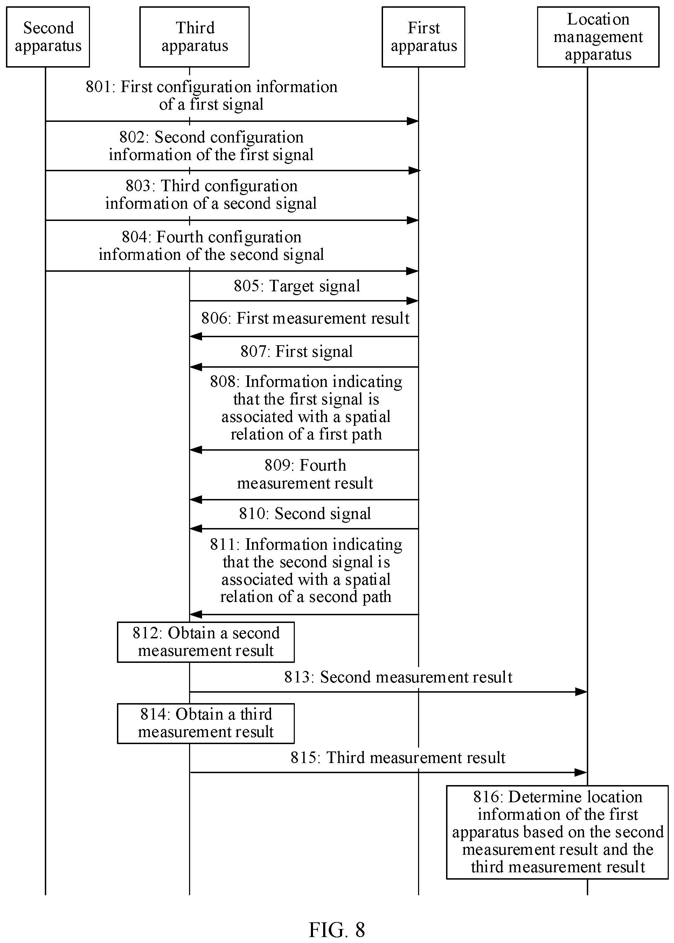

Based on the embodiments shown in FIG. 1, FIG. 2A, FIG. 2B, FIG. 2C, FIG. 2D, FIG. 2E, FIG. 3, FIG. 4, FIG. 5, FIG. 6, and FIG. 7 and the foregoing other content, **FIG. 8** is an example of a schematic flowchart of a communication method according to an embodiment of this application. For ease of understanding of this application, interaction between a first apparatus, a second apparatus, a third apparatus, and a location management apparatus is described in FIG. 8. For descriptions of the apparatuses in FIG. 8, refer to related descriptions in FIG. 5. Details are not described again.

As shown in FIG. 8, the method includes the following steps.

**Step 801:** The second apparatus sends first configuration information of a first signal.

Correspondingly, the first apparatus receives the first configuration information of the first signal.

For related content of step 801, refer to related content of step 501. Details are not described again.

**Step 802:** The second apparatus sends second configuration information of the first signal.

Correspondingly, the first apparatus receives the second configuration information. The second configuration information indicates that the first signal is associated with a spatial relation of a path of a target signal.

For related content of step 802, refer to related content of step 502. Details are not described again.

**Step 803:** The second apparatus sends third configuration information of a second signal.

Correspondingly, the first apparatus receives the third configuration information of the second signal. The third configuration information indicates that the second signal is associated with a spatial relation of the target signal.

In embodiments of this application, the third configuration information is similar to the first configuration information. A difference lies in that the first configuration information indicates that the first signal is associated with the spatial relation of the target signal, and the third configuration information indicates that the second signal is associated with the spatial relation of the target signal. For related content of the third configuration information, refer to related descriptions of the first configuration information. Details are not described herein again.

**Step 804:** The second apparatus sends fourth configuration information of the second signal.

Correspondingly, the first apparatus receives the fourth configuration information of the second signal. The fourth configuration information indicates that the second signal is associated with a spatial relation of a path of the target signal.

In embodiments of this application, the fourth configuration information is similar to the second configuration information. A difference lies in that the second configuration information indicates that the first signal is associated with the spatial relation of the path of the target signal, and the fourth configuration information indicates that the second signal is associated with the spatial relation of the path of the target signal. For an implementation of the fourth configuration information, refer to the descriptions of the implementation A1 and the implementation A2. In a possible implementation, when the implementation A2 is used, the fourth configuration information and the second configuration information may be two pieces of information, or may be same information. For example, the second apparatus configures one piece of path switch information for the first signal and the second signal. For related content of the fourth configuration information, refer to related descriptions of the second configuration information. Details are not described herein again.

**Step 805:** The third apparatus sends the target signal.

Correspondingly, the first apparatus receives the target signal.

For related content of step 805, refer to related content of step 503. Details are not described again.

**Step 806:** The first apparatus sends a first measurement result.

For related content of step 806, refer to related content of step 504. Details are not described again.

**Step 807:** The first apparatus sends the first signal.

Correspondingly, the third apparatus receives the first signal.

For related content of step 807, refer to related content of step 505. Details are not described again.

**Step 808:** The first apparatus sends information indicating that the first signal is associated with a spatial relation of a first path.

Correspondingly, the third apparatus receives the information indicating that the first signal is associated with the spatial relation of the first path.

For related content of step 808, refer to related content of step 506. Details are not described again.

**Step 809:** The first apparatus sends a fourth measurement result.

Correspondingly, the third apparatus receives the fourth measurement result.

Step 809 is an optional step. The first apparatus may measure the target signal to obtain the fourth measurement result. The fourth measurement result includes a measurement result of a second path of the target signal. The fourth measurement result may be used to position the first apparatus. The first apparatus may report the fourth measurement result to the third apparatus or the location management apparatus. FIG. 8 is a diagram by using an example in which the first apparatus reports the fourth measurement result to the third apparatus.

For example, the fourth measurement result may include a time of arrival at which the second path of the target signal arrives at the first apparatus. The fourth measurement result may further include a sending time of the second signal. The time of arrival at which the second path arrives at the first apparatus and the sending time of the second signal may be used to determine a second RTT between the third apparatus and the second apparatus. The second RTT is used to determine a location of the first apparatus. The fourth measurement result is similar to the first measurement result. A difference lies in that the fourth measurement result is obtained based on the measurement result of the second path of the target signal, and the first measurement result is obtained based on a measurement result of the first path of the target signal. For other content of the fourth measurement result, refer to related descriptions of the first measurement result.

Step 809 is an optional step. Alternatively, the first apparatus may not report information about the path, and the third apparatus may not determine the information about the path corresponding to the received signal. In embodiments of this application, when the first apparatus does not report the information about the path, the third apparatus may alternatively determine, according to a preset rule, the information about the path corresponding to the received signal. For example, the third apparatus may obtain configuration information of the second signal. The configuration information of the second signal may include resource information of the second signal and information about a path associated with a spatial relation of the second signal. Then, the third apparatus may determine, based on the received resource information of the second signal, information about a path corresponding to the resource information, and then determine the path associated with the spatial relation of the received signal.

**Step 810:** The first apparatus sends the second signal.

Correspondingly, the third apparatus receives the second signal.

In step 810, the first apparatus may send the second signal based on the third configuration information and the fourth configuration information. For example, the first apparatus may determine the second path, and send the second signal based on the second path, where the second signal is associated with the spatial relation of the second path.

If the second apparatus sets the fourth configuration information in the manner in the implementation A1, the first apparatus may determine the second path based on information that is about the second path and that is indicated by using the fourth configuration information. If the second apparatus sets the fourth configuration information in the manner in the implementation A2, the first apparatus may use the path of the target signal as the path associated with the spatial relation of the second signal, in other words, the first apparatus determines to select the path of the target signal as the second path. For example, the first apparatus may determine a plurality of signals (for example, the first signal and the second signal) that have spatial relations with the path of the target signal, and then associate at least two of a plurality of paths of the target signal with the spatial relations of the plurality of signals. It may also be understood that two paths of the target signals associated with spatial relations of at least two of the plurality of signals are different; or two paths of the target signals associated with spatial relations of any two of the plurality of signals are different. In this way, the first apparatus may be positioned with reference to a signal having more different paths, so that positioning accuracy can be improved.

**Step 811:** The first apparatus sends information indicating that the second signal is associated with the spatial relation of the second path.

Correspondingly, the third apparatus receives the information indicating that the second signal is associated with the spatial relation of the second path.

Step 811 is an optional step. The first apparatus may send, to the third apparatus, the information indicating that the second signal is associated with the spatial relation of the second path (this is used as an example in FIG. 8 for illustration); or may send, to the location management apparatus, the information indicating that the second signal is associated with the spatial relation of the second path.

In this application, an implementation of the information indicating that the second signal is associated with the spatial relation of the second path is similar to that of the information indicating that the first signal is associated with the spatial relation of the first path. Details are not described again.

**Step 812:** The third apparatus obtains a second measurement result.

For related content of step 812, refer to related content of step 507. Details are not described again.

**Step 813:** The third apparatus sends the second measurement result.

Correspondingly, the location management apparatus receives the second measurement result.

For related content of step 813, refer to related content of step 508. Details are not described again.

**Step 814:** The third apparatus obtains a third measurement result.

In step 814, the third apparatus may measure the second signal, and determine the third measurement result based on a measurement result of the second signal. The third measurement result is used to determine the location of the first apparatus.

For example, the third measurement result may include information about an angle of arrival, and the information about the angle of arrival may include an angle of arrival in a horizontal direction of the second signal and/or an angle of arrival in a vertical direction of the second signal. For another example, the third measurement result may include the second RTT, and the second RTT is an RTT corresponding to the target signal and the second signal. For example, the second RTT may be obtained by using [(Time of arrival of the second signal-Transmitting time of the target signal)-(Transmitting time of the second signal-Time of arrival of the second path of the target signal)]. The third measurement result may further include other information, for example, phase difference information, to improve positioning precision.

In embodiments of this application, the third apparatus may send the third measurement result to the location management apparatus, so that the location management apparatus positions the first apparatus with reference to the third measurement result. In another possible implementation, the third apparatus may alternatively position the first apparatus with reference to the third measurement result, in other words, may not send the third measurement result. In FIG. 8, an example in which the third apparatus sends the third measurement result to the location management apparatus is used for illustration. For a solution in which the third apparatus positions the first apparatus based on the third measurement result, refer to a subsequent manner in which the location management apparatus positions the first apparatus based on the third measurement result. Details are not described herein.

**Step 815:** The third apparatus sends the third measurement result.

Correspondingly, the location management apparatus receives the third measurement result.

In a possible implementation, the third measurement result sent by the third apparatus may further include the information about the second path, to indicate the information about the path corresponding to the third measurement result. The third apparatus obtains the information about the second path in a plurality of manners. For example, the third apparatus may receive, from the first apparatus, the information indicating that the second signal is associated with the spatial relation of the second path, and then determine that the third measurement result corresponds to the second path. Alternatively, the third apparatus may obtain the configuration information of the second signal, where the configuration information of the second signal may include the resource information of the second signal and the information about the path associated with the spatial relation of the second signal. Then, the third apparatus may determine, based on the received resource information of the signal, the information about the path corresponding to the resource information, and then determine the information about the path associated with the spatial relation of the received second signal.

**Step 816:** The location management apparatus determines location information of the first apparatus based on the second measurement result and the third measurement result.

In a possible implementation, the location management apparatus may position the first apparatus based on the second measurement result and the third measurement result. For example, in the solution described in FIG. 4, the location management apparatus may position the first apparatus based on the angle of arrival positioning technology and the RTT positioning technology. In addition, because the second measurement result may include the first RTT, and the third measurement result may include the second RTT, positioning precision may be further improved when positioning is performed with reference to the two RTTs.

In embodiments of this application, the third apparatus sends the target signal to the first apparatus, and the first apparatus measures the target signal in a plurality of beam directions. For example, the first apparatus obtains signal strengths of the first path and the second path through measurement by using a beam 1, and obtains signal strengths of the first path and the second path through measurement by using a beam 2. Because directions of the two beams are different, two signal strengths that are of a same path and that are measured in the two beam directions may be different.

In a possible implementation, for the first path of the target signal, the first apparatus sends, by using a beam that has strong energy (a large signal strength value) and that corresponds to the first path, the first signal associated with the spatial relation of the first path, to associate the spatial relation of the first signal with the first path of the target signal.

For example, for a plurality of signal strength values obtained by measuring the second path by the first apparatus, a signal strength value obtained by measuring the second path by the first apparatus by using the beam 2 is largest. In this case, that when the first apparatus sends the second signal by using the beam 2, the beam of the second signal faces the second path may also be understood as that the first apparatus sends the second signal by using the beam 2, to associate the spatial relation of the second signal with the second path of the target signal.

In embodiments of this application, the first apparatus sends at least two signals to the third apparatus, and spatial relations of the two signals are respectively associated with spatial relations of two paths of a same signal. In this way, positioning precision can be improved.

In a possible implementation, the first signal and the second signal may be from a same panel (panel). For example, phases of the first signal and the second signal that are transmitted by an antenna element on an antenna panel are controlled, so that radio waves are concentrated in a specific direction 1 and a specific direction 2. The direction 1 is close to or consistent with a direction of the first path of the target signal (or the direction 1 corresponds to the beam 1), and the direction 2 is close to or consistent with a direction of the second path of the target signal (or the direction 2 corresponds to the beam 2). Because the first signal and the second signal from the same panel have same clock drift, after differential calculation is used, impact caused by the clock drift can be reduced, and a group delay error can be reduced, so that positioning precision can be improved.

In another possible implementation, the first signal and the second signal may be from different panels (panel). In this case, the third apparatus may perform some operations such as calibration and compensation. Further, with reference to the solution provided in embodiments of this application, positioning precision can be further improved.

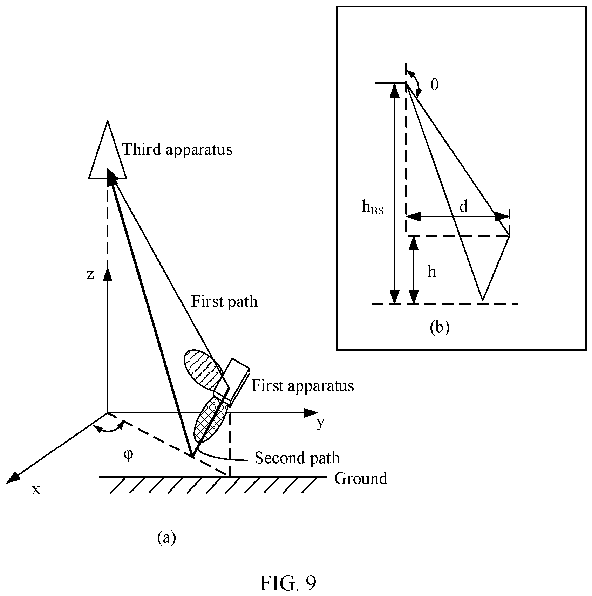

**FIG. 9** is an example of a diagram of a principle of determining location information of a first apparatus based on a first signal and a second signal according to an embodiment of this application. As shown in FIG. 9, a spatial relation of a first signal sent by the first apparatus is associated with a first path of a target signal, and a spatial relation of a second signal sent by the first apparatus is associated with a second path of the target signal. The first path is a direct path, and the second path is a reflection path. The second path may be a reflection path constructed by using the ground, a wall, or any reflection panel. In FIG. 9, an example in which the second path is a reflection path reflected by using the ground is used for presentation. (a) in FIG. 9 shows a diagram of two paths of the first apparatus in a three-dimensional coordinate system, and (b) in FIG. 9 shows a diagram of a geometric relation of a plane constructed by the two paths. With reference to (a) in FIG. 9 and (b) in FIG. 9, an identifier of a height from the first apparatus to the ground is h, an identifier of a length of a projection of the second apparatus and the third apparatus on a horizontal plane (a plane formed by an x-axis and a y-axis) is d, an angle of arrival of the first signal includes an angle of arrival in a horizontal direction and an angle of arrival in a vertical direction, an identifier of the angle of arrival in the horizontal direction is $\varphi$, and an identifier of the angle of arrival in the vertical direction is $\theta$. An identifier of a first RTT determined based on the first signal and the target signal is RTT1, and an identifier of a second RTT determined based on the second signal and the target signal is RTT2. The following formula (3) may be obtained by using geometric relations in (a) in FIG. 9 and (b) in FIG. 9:

$$\begin{cases} d = -(h_{\mathrm{BS}} - h) * \tan\theta \\ \sqrt{(h_{\mathrm{BS}} + h)^2 + d^2} - \sqrt{(h_{\mathrm{BS}} - h)^2 + d^2} = \frac{p}{2} \end{cases} \qquad \text{Formula (3)}$$

In the formula (3), p is a product of a speed of light and a difference between the second RTT and the first RTT, and values of d and h may be obtained by using the foregoing formula (3). Further, coordinate information of the first apparatus may be obtained, and the coordinate information of the first apparatus may be determined by using the following formula (4):

$$\begin{cases} x = x_{\mathrm{BS}} + d\cos\varphi \\ y = y_{\mathrm{BS}} + d\sin\varphi \end{cases} \qquad \text{Formula (4)}$$

With reference to the formula (3), it can be learned that a value of $\sqrt{(h_{\mathrm{BS}} + h)^2 + d^2}$ in the formula (3) is equal to a distance of a transmission path of the second path, and a value of $\sqrt{(h_{\mathrm{BS}} - h)^2 + d^2}$ in the formula (3) is equal to a distance of a transmission path of the first path. Because p is the product of the speed of light and the difference between the second RTT and the first RTT, $\frac{p}{2}$ may be considered as a difference that is between the distance of the transmission path of the second path and the distance of the transmission path of the first path and that is calculated based on the two RTTs and the speed of light. It can be learned that, in a process of solving by using the formula (3), a subtraction operation is performed between the first RTT and the second RTT. The first RTT may be affected by a transmission delay, and the second RTT may also be affected by the transmission delay. Therefore, the subtraction operation between the first RTT and the second RTT may reduce impact of the transmission delay, so that positioning precision can be improved.

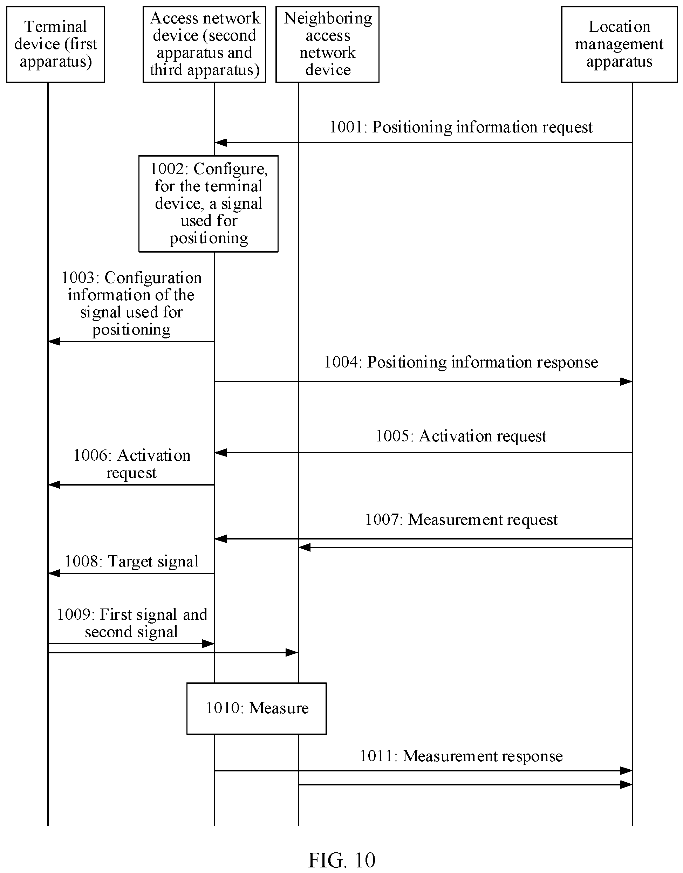

Based on the embodiments shown in FIG. 1, FIG. 2A, FIG. 2B, FIG. 2C, FIG. 2D, FIG. 2E, FIG. 3, FIG. 4, FIG. 5, FIG. 6, FIG. 7, and FIG. 8, and the foregoing other content, FIG. 10 is an example of a schematic flowchart of a communication method according to an embodiment of this application. For descriptions of the apparatuses in FIG. 10, refer to related descriptions in FIG. 5. Details are not described again. In the example shown in FIG. 10, the first apparatus is a terminal device or a chip (system) in the terminal device, the second apparatus and the third apparatus are same apparatuses, and each of the second apparatus and the third apparatus is an access network device or a chip (system) in the access network device.

As shown in FIG. 10, the method includes the following steps.

**Step 1001:** A location management apparatus sends a positioning information request to the access network device.

The positioning information request may be a message used to request to configure a reference signal resource for the terminal device. The positioning information request may be a new radio positioning protocol annex (new radio positioning protocol annex, NRPPa) message, for example, a positioning information request (positioning information request) message.

In a possible implementation, before step 1001, the location management apparatus may obtain some information about an access network device participating in positioning and an access network device of a neighboring access network device of the access network device, for example, a list of transmission reception nodes (transmission reception points, TRPs) included in the access network device and a corresponding TRP information type, for use in subsequent positioning. Before step 1001, the location management apparatus may also query a capability of the terminal device from the terminal device, for example, may query information about a positioning technology supported by the terminal device.

**Step 1002:** The access network device configures, for the terminal device, a signal used for positioning.

**Step 1003:** The access network device sends, to the terminal device, configuration information of the signal used for positioning.

Correspondingly, the terminal device receives the configuration information of the signal used for positioning. The configuration information of the signal used for positioning may include the first configuration information and the second configuration information, and may further include the third configuration information and the fourth configuration information.

**Step 1004:** The access network device sends a positioning information response to the location management apparatus.

The positioning information response is a response message of the positioning information request. The positioning information response may be, for example, an NRPPa message; or may be, for example, a positioning information response (positioning information response) message.

**Step 1005:** The location management apparatus sends an activation request to the access network device.

The activation request is used to request to activate the signal used for positioning on a side of terminal device. The activation request may be an NRPPa message, for example, may be a terminal device SRS activation request (request UE SRS activation).

**Step 1006:** The access network device sends an activation request to the terminal device.

The activation request is used to request to activate the signal used for positioning on the side of terminal device, and the activation request may be an activate terminal device SRS transmission message (activate UE SRS transmission).

**Step 1007:** The location management apparatus sends a measurement request to the access network device and at least one access network device of the neighboring access network device of the access network device.

Correspondingly, the access network device and the at least one access network device of the neighboring access network device receive the measurement request.

**Step 1008:** The access network device sends a target signal to the terminal device.

**Step 1009:** The terminal device sends a first signal and a second signal.

For related content of the first signal and the second signal, refer to the foregoing content. Details are not described again.

After receiving the target signal, the terminal device may further send, to the access network device, a measurement result obtained by measuring the target signal (this step is not shown in the figure).

**Step 1010:** The access network device and the access network device of the neighboring access network device of the access network device measure the received first signal and the received second signal.

**Step 1011:** The access network device and the access network device of the neighboring access network device of the access network device sends a measurement response to the location management apparatus.

Correspondingly, the location management apparatus receives the measurement response.

The measurement response may include the second measurement result and the third measurement result, so that the location management apparatus determines location information of the terminal based on the second measurement result and the third measurement result.

In embodiments of this application, the second measurement result and the third measurement result may include path information, so that the location management apparatus knows that two signals corresponding to the two measurement results are associated with spatial relations of two paths of a same signal. Therefore, when determining location information of the second apparatus based on the two measurement results, the location management apparatus can determine that precision of the determined location information is high, so that positioning performance is improved. For example, the location management apparatus may discard some location information with low positioning precision; or set small weight values for some location information with low positioning precision, to improve positioning precision of the first apparatus.

It should be noted that names of the foregoing messages are merely used as examples. With evolution of communication technologies, a name of any of the foregoing messages may change. However, regardless of how the names of the messages change, the messages fall within the protection scope of this application provided that meanings of the messages are the same as those of the foregoing messages in this application.

In embodiments of this application, sending information to a terminal device may be understood as that a destination of the information is the terminal device. For example, that a module A sends information to a terminal includes: The module A sends the information to the terminal through an air interface. Optionally, the module A may perform a baseband and/or intermediate radio frequency operation on the information; or the module A submits the information to a module B, and the module B sends the information to the terminal. When sending the information to the terminal, the module B may transparently transmit the information; segment the information and then send the information; or multiplex the information and other information and then send the information. Optionally, the module B may perform a baseband and/or intermediate radio frequency operation on the information and then send the information. Optionally, the module B may encapsulate the information in a data packet. Optionally, the module B may further add a header, a padding bit, and/or the like to the data packet.

In embodiments of this application, receiving information from a terminal device may be understood as that a source of the information is the terminal device. For example, that a module A receives information from a terminal device includes: The module A receives the information from the terminal through an air interface. Optionally, the module A may perform a baseband and/or intermediate radio frequency operation on the information; or a module B receives the information from the terminal through an air interface, and delivers the information to the module A. That the module B delivers the information to the module A includes: transparently delivering the received information to the module A; combining a plurality of received segments into the information and then delivering the information to the module A; or extracting the information from multiplexed information and then delivering the information to the module A. Optionally, the module B may perform a baseband and/or intermediate radio frequency operation on the received information and then send the information. Optionally, the information received by the module B is encapsulated in a data packet. Optionally, the data packet includes a header, a padding bit, and/or the like.

The module B may be one module, or may be a plurality of modules coupled in sequence. This is not limited. For example, the module A is a DU module, and the module B is an RU module. For another example, the module A is a CU-CP module, and the module B is a DU module and an RU module.

The foregoing mainly describes, from a perspective of interactions between the network elements, the solutions provided in this application. It may be understood that, to implement the foregoing functions, the foregoing network elements include corresponding hardware structures and/or software modules for performing the functions. A person skilled in the art should easily be aware that, in combination with units and algorithm steps of the examples described in embodiments disclosed in this specification, the present invention may be implemented by using hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of the present invention.

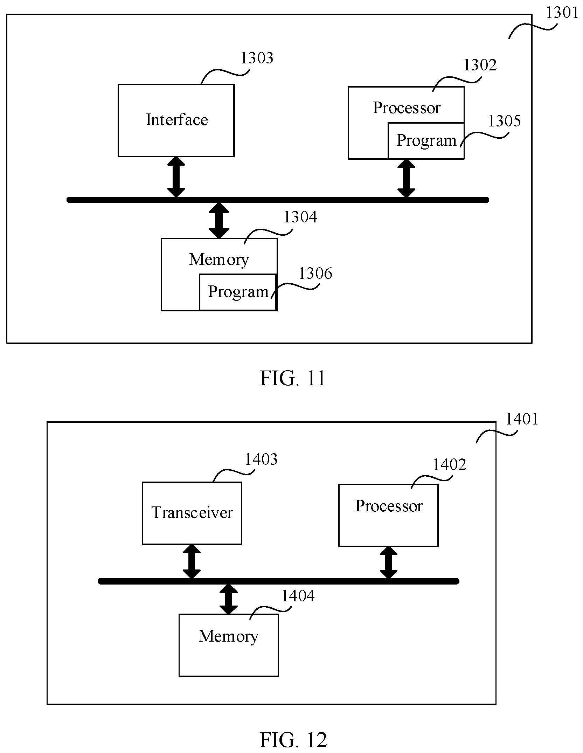

According to the foregoing method, FIG. 11 is a diagram of a structure of an apparatus according to an embodiment of this application.

FIG. 11 is a simplified diagram of an apparatus 1301. The apparatus 1301 is configured to implement a function of a network element in embodiments of this application. For example, the network element may be a base station, a terminal, a DU, a CU, a CU-CP, a CU-UP, or an RU. The apparatus 1301 may be the network element, an apparatus that can be installed in the network element, or an apparatus that can be used together with the network element. This is not limited. For example, the apparatus may be a chip or a chip system. The apparatus 1301 includes an interface 1303 and a processor 1302. Optionally, the processor 1302 is configured to execute a program 1305. The processor 1302 may store the program 1305, or obtain the program 1305 from another component or another device (for example, from a memory 1304 or from a third-party website through downloading). Optionally, the apparatus 1301 includes the memory 1304. The memory 1304 is configured to store a program 1306. The program 1306 may be pre-stored, or may be subsequently loaded. Optionally, the memory 1304 may be further configured to store necessary data. These components operate together to provide various functions described in embodiments of this application.

The processor 1302 may include one or more processors to serve as a combination of computing devices. The processor 1302 may include one or more of the following: a microprocessor, a microcontroller, a digital signal processor (Digital Signal Processor, DSP), a digital signal processor device (Digital Signal Processor device, DSPD), an application-specific integrated circuit (Application-Specific Integrated Circuit, ASIC), a field programmable gate array (Field Programmable Gate Array, FPGA), a programmable logic device (programmable logic device, PLD), gating logic, transistor logic, a discrete hardware circuit, a processing circuit or another appropriate hardware or firmware, and/or a combination of hardware and software configured to perform the various functions described in embodiments of this application. The processor 1302 may be a general-purpose processor or a dedicated processor. For example, the processor 1302 may be a baseband processor or a central processing unit. The baseband processor may be configured to process a communication protocol and communication data. The central processing unit may be configured to: execute a software program, and process data in the software program.

The interface 1303 may include any appropriate hardware or software configured to enable communication with one or more computer devices (for example, the network element in embodiments of this application). For example, in some embodiments, the interface 1303 may include a terminal and/or a pin configured to be coupled with a wire of a wired connection or a wireless interface of a wireless connection. In some embodiments, the interface 1303 may include a transmitter, a receiver, an interface, and/or an antenna. The interface may be configured to enable communication between computer devices (for example, the network elements in embodiments of this application) by using any available protocol (for example, a 3GPP standard protocol).

The program in embodiments of this application is software in a broad sense. The software may be program code, a program, a subprogram, an instruction set, code, a code segment, a software module, an application program, a software application program, or the like. The program may be run in a processor and/or a computer, to perform various functions and/or processes described in embodiments of this application.

The memory 1304 may store necessary data needed when the processor 1302 executes software. The memory 1304 may be implemented by using any suitable storage technology. For example, the memory 1304 may be any available storage medium that can be accessed by a processor and/or a computer. A non-limiting example of the storage medium is a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, an optical disk memory, a magnetic disk storage medium, a magnetic storage device, a flash memory, a register, a state memory, a remotely installed memory, a local or remote storage component, or any other medium that can carry or store software, data, or information and can be accessed by a processor/computer.

The memory 1304 and the processor 1302 may be disposed separately, or may be integrated together. The processor 1302 may read information from the memory 1304, and store and/or write information in the memory. The memory 1304 may be integrated into the processor 1302. The processor 1302 and the memory 1304 may be disposed in an integrated circuit (for example, an application-specific integrated circuit (application-specific integrated circuit, ASIC)). The integrated circuit may be disposed in the network element or another network node in embodiments of this application. In the figure, the memory 1304 is a dashed line, which further identifies that the memory is optional.

Further, the communication apparatus 1301 may further include a bus system. The processor 1302, the memory 1304, and the interface 1303 may be connected through the bus system.

As shown in FIG. 11, the apparatus 1301 may be a first apparatus, a second apparatus, a third apparatus, or a location management apparatus; or may be a chip or a circuit, for example, a chip or a circuit that may be disposed in the first apparatus, a chip or a circuit that may be disposed in the second apparatus, a chip or a circuit that may be disposed in the third apparatus, or a chip or a circuit that may be disposed in the location management apparatus.

When the apparatus 1301 is configured to implement a function of the first apparatus, in a possible implementation, the processor 1302 is configured to perform the following operations through the interface 1303: receiving first configuration information of a first signal, receiving second configuration information of the first signal, and sending the first signal based on the first configuration information and the second configuration information. The first configuration information indicates that the first signal is associated with a spatial relation of a target signal. The second configuration information indicates that the first signal is associated with a spatial relation of a path of the target signal.

In a possible implementation, the processor 1302 is configured to perform the following operations through the interface 1303: receiving third configuration information of a second signal, receiving fourth configuration information of the second signal, and sending the second signal based on the third configuration information and the fourth configuration information. The third configuration information indicates that the second signal is associated with the spatial relation of the target signal, and the fourth configuration information indicates that the second signal is associated with a spatial relation of a path of the target signal.

In a possible implementation, the processor 1302 is configured to perform the following operations through the interface 1303: receiving the target signal, determining a first path of the target signal, and sending the first signal based on the first path. The first signal is associated with a spatial relation of the first path.

In a possible implementation, the processor 1302 is configured to send, through the interface 1303, information indicating that the first signal is associated with the spatial relation of the first path.

In a possible implementation, the processor 1302 is configured to perform the following operations through the interface 1303: obtaining a first measurement result based on a measurement result of the target signal, and sending the first measurement result. The first measurement result includes a measurement result of the first path of the target signal.

When the apparatus 1301 is configured to implement a function of the second apparatus, in a possible implementation, the processor 1302 is configured to perform the following operations through the interface 1303: sending first configuration information of a first signal, and sending second configuration information of the first signal. The first configuration information indicates that the first signal is associated with a spatial relation of a target signal, and the second configuration information indicates that the first signal is associated with a spatial relation of a path of the target signal.

In a possible implementation, the processor 1302 is configured to perform the following operations through the interface 1303: sending third configuration information of a second signal, and sending fourth configuration information of the second signal. The third configuration information indicates that the second signal is associated with the spatial relation of the target signal, and the fourth configuration information indicates that the second signal is associated with a spatial relation of a path of the target signal.

When the apparatus 1301 is configured to implement a function of the third apparatus, in a possible implementation, the processor 1302 is configured to perform the following operations through the interface 1303: sending a target signal to a first apparatus, and receiving a first signal from the first apparatus. The processor 1302 is configured to determine a second measurement result based on a measurement result of the first signal. The first signal is associated with a spatial relation of a first path of the target signal, and the second measurement result is used to determine a location of the first apparatus.

In a possible implementation, the processor 1302 is configured to receive, through the interface 1303, information indicating that the first signal is associated with the spatial relation of the first path.

In a possible implementation, the processor 1302 is configured to receive a first measurement result through the interface 1303, where the first measurement result includes a measurement result of the first path of the target signal.

In a possible implementation, the processor 1302 is configured to send the second measurement result through the interface 1303, where the second measurement result includes information about the first path.

In a possible implementation, the processor 1302 is configured to: receive a second signal from the first apparatus through the interface 1303, and determine a third measurement result based on a measurement result of the second signal. The second signal is associated with a spatial relation of a second path of the target signal, and the third measurement result is used to determine the location of the first apparatus.

In a possible implementation, the processor 1302 is configured to send the third measurement result through the interface 1303. The third measurement result includes information about the second path.

When the apparatus 1301 is configured to implement a function of the location management apparatus, in a possible implementation, the processor 1302 is configured to receive a second measurement result through the interface 1303. The second measurement result is determined based on a measurement result of a first signal, and the first signal is associated with a spatial relation of a first path of a target signal. The processor 1302 is configured to determine a location of a first apparatus based on the second measurement result.

In a possible implementation, the processor 1302 is configured to: receive a third measurement result through the interface 1303, and determine the location of the first apparatus based on the second measurement result and the third measurement result. The third measurement result is determined based on a second signal, and the second signal is associated with a spatial relation of a second path of the target signal.

For concepts, explanations, detailed descriptions, and other steps of the communication apparatus that are related to the technical solutions provided in embodiments of this application, refer to the descriptions of the content in the foregoing methods or other embodiments. Details are not described herein again.

According to the foregoing method, **FIG. 12** is a diagram of a structure of a communication apparatus according to an embodiment of this application. As shown in FIG. 12, the apparatus 1401 may include a transceiver 1403 and a processor 1402. Further, the apparatus 1401 may include a memory 1404. In the figure, the memory 1404 is a dashed line, which further identifies that the memory is optional. The transceiver 1403 is configured to input and/or output information. The processor 1402 is configured to execute a computer program or instructions, so that the apparatus 1401 implements the method of the first apparatus, second apparatus, third apparatus, or location management apparatus in the related solutions in FIG. 5, FIG. 8, or FIG. 10. In this embodiment of this application, the transceiver 1403 may implement the solution implemented by using the interface 1303 in FIG. 11, the processor 1402 may implement the solution implemented by using the processor 1302 in FIG. 11, and the memory 1404 may implement the solution implemented by using the memory 1304 in FIG. 11. Details are not described herein again.

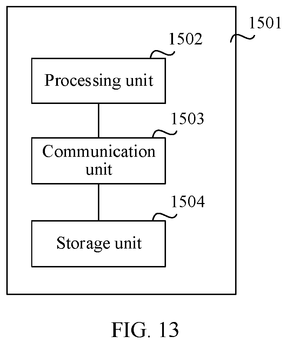

Based on the foregoing embodiments and a same concept, **FIG. 13** is a diagram of a communication apparatus according to an embodiment of this application. As shown in FIG. 13, the apparatus 1501 may be a first apparatus, a second apparatus, a third apparatus, or a location management apparatus; or may be a chip or a circuit, for example, a chip or a circuit that may be disposed in the first apparatus, a chip or a circuit that may be disposed in the second apparatus, a chip or a circuit that may be disposed in the third apparatus, or a chip or a circuit that may be disposed in the location management apparatus.

The apparatus 1501 includes a processing unit 1502 and a communication unit 1503. Further, the apparatus 1501 may include a storage unit 1504, or may not include a storage unit 1504. In the figure, the storage unit 1504 is a dashed line, which further identifies that the storage unit is optional.

When the apparatus 1301 is configured to implement a function of the first apparatus, in a possible implementation, the processor 1302 is configured to perform the following operations through the interface 1303: receiving first configuration information of a first signal, receiving second configuration information of the first signal, and sending the first signal based on the first configuration information and the second configuration information. The first configuration information indicates that the first signal is associated with a spatial relation of a target signal. The second configuration information indicates that the first signal is associated with a spatial relation of a path of the target signal.

When the apparatus 1301 is configured to implement a function of the second apparatus, in a possible implementation, the processor 1302 is configured to perform the following operations through the interface 1303: sending first configuration information of a first signal, and sending second configuration information of the first signal. The first configuration information indicates that the first signal is associated with a spatial relation of a target signal, and the second configuration information indicates that the first signal is associated with a spatial relation of a path of the target signal.

When the apparatus 1301 is configured to implement a function of the third apparatus, in a possible implementation, the processor 1302 is configured to perform the following operations through the interface 1303: sending a target signal to a first apparatus, and receiving a first signal from the first apparatus. The processor 1302 is configured to determine a second measurement result based on a measurement result of the first signal. The first signal is associated with a spatial relation of a first path of the target signal, and the second measurement result is used to determine a location of the first apparatus.

When the apparatus 1301 is configured to implement a function of the location management apparatus, in a possible implementation, the processor 1302 is configured to receive a second measurement result through the interface 1303. The second measurement result is determined based on a measurement result of a first signal, and the first signal is associated with a spatial relation of a first path of a target signal. The processor 1302 is configured to determine a location of a first apparatus based on the second measurement result.

For concepts, explanations, detailed descriptions, and other steps of the communication apparatus that are related to the technical solutions provided in embodiments of this application, refer to the descriptions of the content in the foregoing methods or other embodiments. Details are not described herein again.

It may be understood that for a function of each unit in the apparatus 1501, refer to implementations of corresponding method embodiments. Details are not described herein again.

It should be understood that division into units of the communication apparatus is merely logical function division. During actual implementation, all or some of the units may be integrated into a physical entity, or may be physically separated. In this embodiment of this application, the communication unit 1503 may be implemented by using the interface 1303 in FIG. 11, and the processing unit 1502 may be implemented by using the processor 1302 in FIG. 11.

According to the methods provided in embodiments of this application, this application further provides a computer program product. The computer program product includes computer program code or instructions. When the computer program code is run or the instructions are run on a computer, the computer is enabled to perform the method in any one of the embodiments shown in FIG. 5, FIG. 8, or FIG. 10.

According to the methods provided in embodiments of this application, this application further provides a computer-readable storage medium. The computer-readable medium stores program code. When the program code is run on a computer, the computer is enabled to perform the method in any one of the embodiments shown in FIG. 5, FIG. 8, or FIG. 10.

According to the method provided in embodiments of this application, this application further provides a chip system. The chip system may include a processor. The processor is coupled to a memory, and may be configured to perform the method in any one of the embodiments shown in FIG. 5, FIG. 8, or FIG. 10. Optionally, the chip system further includes the memory. The memory is configured to store a computer program (which may also be referred to as code or instructions). The processor is configured to invoke a computer program from the memory and run the computer program, so that a device on which the chip system is installed performs the method in any one of the embodiments shown in FIG. 5, FIG. 8, or FIG. 10.

According to the method provided in embodiments of this application, this application further provides a system, including the foregoing one or more second apparatuses.

In a possible implementation, the system may further include one or more first apparatuses.

In another possible implementation, the system may further include one or more third apparatuses.

In still another possible implementation, the system may further include a location management apparatus.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be noted that a part of this patent application document includes copyright-protected content. A copyright owner reserves the copyright except copies made for the patent document or the recorded content of the patent document in the China National Intellectual Property Administration.

The first apparatus, the second apparatus, and the third apparatus, and the location management apparatus in the apparatus embodiments correspond to the first apparatus, the second apparatus, the third apparatus, and the location management apparatus in the method embodiments, and a corresponding module or unit performs a corresponding step. For example, a communication unit (transceiver) performs a receiving or sending step in the method embodiments, and a step other than sending and receiving may be performed by a processing unit (processor). For a function of a specific unit, refer to a corresponding method embodiment. There may be one or more processors.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as an internet interacting with other systems by using the signal).

A person of ordinary skill in the art may be aware that, in combination with illustrative logical blocks (illustrative logical blocks) described in embodiments disclosed in this specification and steps (steps) may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist independently physically, or two or more units may be integrated into one unit. When functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

In this application, "at least one" means one or more, and "a plurality of" means two or more. "And/or" describes an association relation between associated objects and indicates that three relations may exist. For example, A and/or B may indicate the following three cases: Only A exists, both A and B exist, and only B exists, where A and B each may be singular or plural. In the text descriptions of this application, the character "/" represents an "or" relation between the associated objects. In a formula in this application, the character "/" represents a "division" relation between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, wherein the method is applied to a first apparatus, and the method comprises:

   receiving first configuration information of a first signal, wherein the first configuration information indicates that the first signal is associated with a spatial relation of a target signal;
   receiving second configuration information of the first signal, wherein the second configuration information indicates that the first signal is associated with a spatial relation of a path of the target signal; and
   sending the first signal based on the first configuration information and the second configuration information.

2. The method according to claim 1, wherein the method further comprises:

   receiving third configuration information of a second signal, wherein the third configuration information indicates that the second signal is associated with the spatial relation of the target signal;
   receiving fourth configuration information of the second signal, wherein the fourth configuration information indicates that the second signal is associated with a spatial relation of a path of the target signal; and
   sending the second signal based on the third configuration information and the fourth configuration information.

3. The method according to claim 1 or 2, wherein the second configuration information indicates that the first signal is associated with a spatial relation of a first path of the target signal.

4. The method according to claim 3, wherein the first path is a 1st path, or the first path is another path.

5. The method according to claim 1 or 2, wherein the second configuration information comprises one or more of first preset information in a message carrying the first configuration information, a first preset bit value carried on a first preset bit, or second preset information on a second preset bit.

6. The method according to any one of claims 1 to 5, wherein the method further comprises:
   sending information indicating that the first signal is associated with the spatial relation of the first path.

7. A communication method, wherein the method is applied to a second apparatus, and the method comprises:

   sending first configuration information of a first signal, wherein the first configuration information indicates that the first signal is associated with a spatial relation of a target signal; and
   sending second configuration information of the first signal, wherein the second configuration information indicates that the first signal is associated with a spatial relation of a path of the target signal.

8. The method according to claim 7, wherein the method further comprises:

   sending third configuration information of a second signal, wherein the third configuration information indicates that the second signal is associated with the spatial relation of the target signal; and
   sending fourth configuration information of the second signal, wherein the fourth configuration information indicates that the second signal is associated with a spatial relation of a path of the target signal.

9. The method according to claim 7 or 8, wherein the second configuration information indicates that the first signal is associated with a spatial relation of a first path of the target signal.

10. The method according to claim 9, wherein the first path is a 1st path, or the first path is another path.

11. The method according to claim 7 or 8, wherein the second configuration information comprises one or more of first preset information in a message carrying the first configuration information, a first preset bit value carried on a first preset bit, or second preset information on a second preset bit.

12. A communication method, wherein the method is applied to a third apparatus, and the method comprises:

sending a target signal to a first apparatus;
receiving a first signal from the first apparatus; and
determining a second measurement result based on a measurement result of the first signal, wherein the first signal is associated with a spatial relation of a first path of the target signal, and the second measurement result is used to determine a location of the first apparatus.

13. A communication method, wherein the method is applied to a location management apparatus, and the method comprises:

receiving a second measurement result, wherein the second measurement result is determined based on a measurement result of a first signal, and the first signal is associated with a spatial relation of a first path of a target signal; and
determining a location of the first apparatus based on the second measurement result.

14. An apparatus, wherein the apparatus is a first apparatus, the apparatus comprises a processor and an interface, and the processor is configured to perform the following operations through the interface:

receiving first configuration information of a first signal, wherein the first configuration information indicates that the first signal is associated with a spatial relation of a target signal;
receiving second configuration information of the first signal, wherein the second configuration information indicates that the first signal is associated with a spatial relation of a path of the target signal; and
sending the first signal based on the first configuration information and the second configuration information.

15. The apparatus according to claim 14, wherein the processor is further configured to perform the following operations through the interface:

receiving third configuration information of a second signal, wherein the third configuration information indicates that the second signal is associated with the spatial relation of the target signal;
receiving fourth configuration information of the second signal, wherein the fourth configuration information indicates that the second signal is associated with a spatial relation of a path of the target signal; and
sending the second signal based on the third configuration information and the fourth configuration information.

16. The apparatus according to claim 14 or 15, wherein the second configuration information indicates that the first signal is associated with a spatial relation of a first path of the target signal.

17. The apparatus according to claim 16, wherein the first path is a 1st path, or the first path is another path.

18. The apparatus according to claim 14 or 15, wherein the second configuration information comprises one or more of first preset information in a message carrying the first configuration information, a first preset bit value carried on a first preset bit, or second preset information on a second preset bit.

19. The apparatus according to any one of claims 14 to 18, wherein the processor is further configured to perform the following operation through the interface:
sending information indicating that the first signal is associated with the spatial relation of the first path.

20. An apparatus, wherein the apparatus is a second apparatus, the apparatus comprises a processor and an interface, and the processor is configured to perform the following operations through the interface:

sending first configuration information of a first signal, wherein the first configuration information indicates that the first signal is associated with a spatial relation of a target signal; and

sending second configuration information of the first signal, wherein the second configuration information indicates that the first signal is associated with a spatial relation of a path of the target signal.

21. The apparatus according to claim 20, wherein the processor is further configured to perform the following operations through the interface:

sending third configuration information of a second signal, wherein the third configuration information indicates that the second signal is associated with the spatial relation of the target signal; and
sending fourth configuration information of the second signal, wherein the fourth configuration information indicates that the second signal is associated with a spatial relation of a path of the target signal.

22. The apparatus according to claim 20 or 21, wherein the second configuration information indicates that the first signal is associated with a spatial relation of a first path of the target signal.

23. The apparatus according to claim 22, wherein the first path is a $1^{st}$ path, or the first path is another path.

24. The apparatus according to claim 22 or 23, wherein the second configuration information comprises one or more of first preset information in a message carrying the first configuration information, a first preset bit value carried on a first preset bit, or second preset information on a second preset bit.

25. An apparatus, wherein the apparatus is a third apparatus, the apparatus comprises a processor and an interface, and the processor is configured to:

send a target signal to a first apparatus through the interface, and receive a first signal from the first apparatus through the interface; and
determine a second measurement result based on a measurement result of the first signal, wherein the first signal is associated with a spatial relation of a first path of the target signal, and the second measurement result is used to determine a location of the first apparatus.

26. An apparatus, wherein the apparatus is a location management apparatus, the apparatus comprises a processor and an interface, and the processor is configured to:

receive a second measurement result through the interface, wherein the second measurement result is determined based on a measurement result of a first signal, and the first signal is associated with a spatial relation of a first path of a target signal; and
determine a location of the first apparatus based on the second measurement result.

27. A communication apparatus, comprising a processor and a memory, wherein

the memory is configured to store a computer program or instructions; and
the processor is configured to execute the computer program or the instructions in the memory, to enable the method according to any one of claims 1 to 6 to be performed, the method according to any one of claims 7 to 11 to be performed, the method according to claim 12 to be performed, or the method according to claim 13 to be performed.

28. A communication apparatus, comprising a processing unit and a communication unit, wherein the processing unit is configured to perform, through the communication unit, the method according to any one of claims 1 to 6, the method according to any one of claims 7 to 11, the method according to claim 12, or the method according to claim 13.

29. A computer-readable storage medium, wherein the computer-readable storage medium stores computer-executable instructions; and when the computer-executable instructions are invoked by a computer, the method according to any one of claims 1 to 6 is performed, the method according to any one of claims 7 to 11 is performed, the method according to claim 12 is performed, or the method according to claim 13 is performed.

30. A chip system, wherein the chip system comprises at least one processor and an interface circuit, the interface circuit and the at least one processor are interconnected through a line, and the processor runs instructions to perform the method according to any one of claims 1 to 6, perform the method according to any one of claims 7 to 11, perform the method according to claim 12, or perform the method according to claim 13.

31. A computer program product, wherein the computer program product stores a computer program, and the computer program comprises program instructions; and when the program instructions are executed by a computer, the method according to any one of claims 1 to 6 is performed, the method according to any one of claims 7 to 11 is performed, the method according to claim 12 is performed, or the method according to claim 13 is performed.

FIG. 1

FIG. 2A

FIG. 2B

FIG. 2C

FIG. 2D

FIG. 2E

FIG. 3

FIG. 4

| Second apparatus | Third apparatus | First apparatus | Location management apparatus |
|---|---|---|---|

501: First configuration information of a first signal

502: Second configuration information of the first signal

503: Target signal

504: First measurement result

505: First signal

506: Information indicating that the first signal is associated with a spatial relation of a first path

507: Obtain a second measurement result

508: Second measurement result

509: Determine location information of the first apparatus based on the second measurement result

FIG. 5

FIG. 6

FIG. 7

| Second apparatus | Third apparatus | First apparatus | Location management apparatus |
|---|---|---|---|

801: First configuration information of a first signal →

802: Second configuration information of the first signal →

803: Third configuration information of a second signal →

804: Fourth configuration information of the second signal →

805: Target signal →

806: First measurement result ←

807: First signal ←

808: Information indicating that the first signal is associated with a spatial relation of a first path ←

809: Fourth measurement result ←

810: Second signal ←

811: Information indicating that the second signal is associated with a spatial relation of a second path ←

812: Obtain a second measurement result

813: Second measurement result →

814: Obtain a third measurement result

815: Third measurement result →

816: Determine location information of the first apparatus based on the second measurement result and the third measurement result

FIG. 8

FIG. 9

FIG. 10

FIG. 11

FIG. 12

1501

1502

Processing unit

1503

Communication
unit

1504

Storage unit

FIG. 13

## INTERNATIONAL SEARCH REPORT

International application No.

**PCT/CN2023/132680**

### A. CLASSIFICATION OF SUBJECT MATTER

H04W4/02(2018.01)i; H04W72/04(2023.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNKI, CNTXT, ENTXTC, ENTXT, 3GPP: 终端, 用户设备, 网络, 配置, 目标信号, 空间关系, 定位参考信号, 探测参考信号, 第一, 第二, 首径, 比特, 测量结果, 测量值, terminal, UE, network, configuration, target signal, spatial relation, PRS, SRS, first, second, path, bit, measurement result, mesurement value

### C. DOCUMENTS CONSIDERED TO BE RELEVANT

| Category* | Citation of document, with indication, where appropriate, of the relevant passages | Relevant to claim No. |
|---|---|---|
| X | CN 112787780 A (VIVO COMMUNICATION TECHNOLOGY CO., LTD.) 11 May 2021 (2021-05-11)<br>  description, paragraphs [0048]-[0830] | 1-31 |
| A | CN 112333624 A (HUAWEI TECHNOLOGIES CO., LTD.) 05 February 2021 (2021-02-05)<br>  entire document | 1-31 |
| A | CN 112822713 A (VIVO COMMUNICATION TECHNOLOGY CO., LTD.) 18 May 2021 (2021-05-18)<br>  entire document | 1-31 |
| A | US 2021014848 A1 (DAVYDOV A. et al.) 14 January 2021 (2021-01-14)<br>  entire document | 1-31 |
| A | HUAWEI. "Introduction of NG UE Capability Info Indication"<br>*3GPP tsg_ran\WG3_Iu R3-172594*, 29 June 2017 (2017-06-29),<br>  entire document | 1-31 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 February 2024** | **03 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/132680**

| Patent document cited in search report | | | Publication date (day/month/year) | Patent family member(s) | | | Publication date (day/month/year) |
|---|---|---|---|---|---|---|---|
| CN | 112787780 | A | 11 May 2021 | None | | | |
| CN | 112333624 | A | 05 February 2021 | None | | | |
| CN | 112822713 | A | 18 May 2021 | None | | | |
| US | 2021014848 | A1 | 14 January 2021 | US | 11671954 | B2 | 06 June 2023 |

**EP 4 622 305 A1**

## REFERENCES CITED IN THE DESCRIPTION

**Patent documents cited in the description**

- CN 202211490362